(19) Europäisches Patentamt
European Patent Office
Office européen des brevets

(11) EP 4 632 098 A1

(12) EUROPEAN PATENT APPLICATION
published in accordance with Art. 153(4) EPC

(43) Date of publication:
15.10.2025 Bulletin 2025/42

(51) International Patent Classification (IPC):
C22C 38/00 (2006.01)    C21D 9/46 (2006.01)
C22C 38/06 (2006.01)    C22C 38/60 (2006.01)

(21) Application number: 24750124.0

(22) Date of filing: 25.01.2024

(52) Cooperative Patent Classification (CPC):
C21D 9/46; C22C 38/00; C22C 38/06; C22C 38/60

(86) International application number:
PCT/JP2024/002240

(87) International publication number:
WO 2024/162175 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.01.2023 JP 2023011603

(71) Applicant: JFE Steel Corporation
Tokyo 100-0011 (JP)

(72) Inventors:
• ASAKAWA, Taiyo
  Tokyo 100-0011 (JP)
• TOBATA, Junya
  Tokyo 100-0011 (JP)
• KIMURA, Hideyuki
  Tokyo 100-0011 (JP)

(74) Representative: Hoffmann Eitle
Patent- und Rechtsanwälte PartmbB
Arabellastraße 30
81925 München (DE)

(54) STEEL SHEET, MEMBER, AND PRODUCTION METHODS FOR THESE

(57) There are provided a steel sheet and a member which have a high strength and excellent delayed fracture resistance, and a method for producing them.

The steel sheet has a chemical composition containing, in mass %: C: not less than 0.15% and not more than 0.45%; Si: not more than 2.0%; Mn: not more than 4.0%; P: not more than 0.10%; S: not more than 0.01%; sol. Al: not more than 0.50%; N: not more than 0.010%; and B: not less than 0.0008% and not more than 0.0100%, with the balance being Fe and incidental impurities, wherein the steel sheet has a steel microstructure where the area ratio of martensite to the entire microstructure is not less than 85% and less than 95%, the area ratio of ferrite to the entire microstructure is not less than 5% and not more than 15%, and the average crystal grain size of ferrite is 10 μm or less, and wherein the number density A of precipitates having an equivalent circular diameter of 500 nm or more satisfies the following formula: A (number/mm$^2$) $\leq 8.5 \times 10^5 \times$ [B].

**Description**

Technical Field

The present invention relates to a steel sheet, such as a high-strength steel sheet for cold press forming which is to be used, for example, in an automobile after undergoing cold press forming, to a member using the steel sheet, and to a method for producing them.

Background Art

In recent years, steel sheets having a tensile strength TS of 1310 MPa or higher grade have been increasingly used for automotive frame parts with a view to reducing the weight of automobiles and improving crash safety. Steel sheets having a tensile strength TS of 1470 MPa or higher grade have been increasingly used for parts such as a bumper and an impact beam.

When a high-strength steel sheet having a tensile strength TS of 1470 MPa or higher grade is formed into a part by cold pressing, there is a fear of the occurrence of delayed fracture due to an increase in residual stress within the part or a deterioration in the delayed fracture resistance of the steel sheet itself.

Delayed fracture herein refers to a phenomenon where when a part is placed in a hydrogen penetration environment while a high stress is applied to the part, hydrogen penetrates into a steel sheet constituting the part, and reduces cohesive forces between atoms and causes a localized deformation, resulting in the formation of microcracks which propagate and cause fracture.

Patent Literature 1 discloses, as a technique for improving resistance to such delayed fracture, a high-strength steel sheet having excellent delayed fracture resistance which was developed based on the finding that delayed fracture resistance can be improved by reducing coarse precipitates that will serve as the point of origin of delayed fracture. The steel sheet has a chemical composition comprising, in mass %, C: not less than 0.13% and not more than 0.40%, Si: not less than 0.02% and not more than 1.5%, Mn: not less than 0.4% and not more than 1.7%, P: not more than 0.030%, S: not less than 0.0002% and less than 0.0010%, sol. Al: not less than 0.01% and not more than 0.20%, N: not more than 0.0055%, O: not more than 0.0025%, Nb: not less than 0.002% and not more than 0.035%, and Ti: not less than 0.002% and not more than 0.040%, the chemical composition satisfying the following formulae (1) and (2), and the balance of the composition being Fe and incidental impurities:

$$[\%Ti] + [\%Nb] > 0.007 \quad (1)$$

$$[\%Ti] \times [\%Nb]^2 \leq 7.5 \times 10^{-6} \quad (2)$$

where, [%Nb] and [%Ti] represent the contents (%) of Nb and Ti.

The steel sheet has a steel microstructure where the total area ratio of martensite and bainite to the entire microstructure is not less than 95% and not more than 100%, with the balance consisting of one or both of ferrite and retained austenite, the average grain size of prior-austenite grains exceeds 5 $\mu$m, the following conditions are satisfied, and inclusion groups with a major axis length of 20 to 80 $\mu$m are present at a density of 5/mm$^2$ or less. The steel sheet has a tensile strength of 1320 MPa or more.

Patent Literature 2 discloses a high-strength cold-rolled steel sheet having excellent hydrogen embrittlement resistance and formability. The steel sheet has a chemical composition comprising, in mass %, C: 0.05 to 0.30%, Si: not more than 2.0% (including 0%), Mn: more than 0.1% and not more than 2.8%, P: not more than 0.1%, S: not more than 0.005%, N: not more than 0.01%, and Al: 0.01 to 0.50%, and containing one or more of Nb, Ti and Zr in a total amount of 0.01% or more, and satisfying the formula: [%C] - [%Nb]/92.9 × 12 - [%Ti]/47.9 × 12 - [%Zr]/91.2 × 12 > 0.03, with the balance of the composition being iron and incidental impurities. The steel sheet has a microstructure where the area ratio of tempered martensite is 50% or more (including 100%), with the balance being ferrite. In the tempered martensite, precipitates are distributed such that the number of precipitates having an equivalent circular diameter of 1 to 10 nm is 20 or more per 1 $\mu$m$^2$ of tempered martensite, and the number of precipitates having an equivalent circular diameter of 20 nm or more and containing one or more of Nb, Ti and Zr is 10 or less per 1 $\mu$m$^2$ of tempered martensite, and that the average grain size of ferrite surrounded by high-angle grain boundaries with a misorientation of 15° or more is 5 $\mu$m or less.

Citation List

Patent Literature

PTL 1: Japanese Patent No. 6388085
PTL 2: Japanese Patent No. 4712882

Summary of Invention

Technical Problem

However, the prior art techniques are not sufficient to achieve excellent delayed fracture resistance while ensuring a tensile strength TS of 1470 MPa or more, and there has been a demand to establish a new technique.

The present invention has been made to solve such problems. It is therefore an object of the present invention to provide a steel sheet and a member which have a tensile strength of 1470 MPa or more (TS ≥ 1470 MPa) and excellent delayed fracture resistance, and a method for producing them.

Excellent delayed fracture resistance refers to that evaluated as excellent in the following evaluation test:

(1) First, a strip specimen, having a size of 100 mm in a direction perpendicular to the rolling direction and 30 mm in the rolling direction, is taken from a steel sheet (coil) at a position at a distance of 1/4 of the coil width from one end of the coil in the width direction.

(2) The long-side end surfaces with a length of 100 mm are sheared, and the specimen is bent as it is (without machining it to remove burrs) such that the burrs are on the outer periphery of the bend, and the specimen is fixed with bolts while maintaining its bent shape.

The shear clearance is 13%, and the rake angle is 1°. The bending is performed such that the tip bending radius is 10 mm and the angle inside the bend apex is 90 degrees (V-bending).

A punch for use in the bending has a tip radius equal to the tip bending radius R, and is U-shaped (the tip R portion is semicircular and the punch body has a thickness of 2R). A die for use in the bending has a corner R of 30 mm. The depth to which the punch pushes the steel sheet is adjusted so that the tip bending angle (the angle inside the bend apex) will be 90 degrees (V-shape).

While the specimen is clamped and tightened with a hydraulic jack so that the distance between the flange ends of the straight portions of the specimen after the bending is equal to that upon the bending (i.e. to cancel out widening of the gap between the flange ends due to spring-back), the specimen is fastened with bolts. The bolts are fixed through elliptical holes (minor axis 10 mm, major axis 15 mm) that have been formed in advance at positions 10 mm inside the short-side edges of the strip specimen.

(3) The bolt-fastened specimen is subjected to a delayed fracture resistance evaluation test by immersing the specimen in a solution prepared by mixing 0.1 mass % ammonium thiocyanate aqueous solution and McIlvaine buffer solution at a mass ratio of 1:1 and adjusting the pH to 8.0, and separately in a solution prepared in the same manner except for adjusting the pH to 7.4. The temperature of each solution is 20°C, and the amount of each solution per 1 cm$^3$ of the surface area of the specimen is 20 ml.

(4) After 48 hours, the presence or absence of visually visible cracks (length 1 mm or more) is checked. A specimen in which no cracks are observed after immersion in the solution adjusted to pH 8.0 is evaluated as excellent in delayed fracture resistance. A specimen in which no cracks are observed after immersion even in the solution adjusted to pH 7.4 is evaluated as particularly excellent in delayed fracture resistance.

Solution to Problem

The present inventors, through their intensive studies to solve the above problems, have found that delayed fracture resistance can be significantly improved when all of the following conditions are satisfied.

i) The area ratio of martensite is not less than 85% and less than 95%.
ii) The area ratio of ferrite is not less than 5% and not more than 15%, and the average crystal grain size of ferrite is 10 μm or less.
iii) The number density A of precipitates having an equivalent circular diameter of 500 nm or more satisfies the following condition:
A (number/mm$^2$) ≤ 8.5 × 10$^5$ × [B], where [B] represents the content (mass %) of B.

The present invention has been accomplished based on the above finding and on additional studies. The present invention can be summarized as follows.

[1] A steel sheet having a chemical composition comprising, in mass %:

C: not less than 0.15% and not more than 0.45%;
Si: not more than 2.0%;
Mn: not more than 4.0%;
P: not more than 0.1%;
S: not more than 0.01%;
sol. Al: not more than 0.5%;
N: not more than 0.010%; and
B: not less than 0.0008% and not more than 0.0100%,
with the balance being Fe and incidental impurities,

wherein the steel sheet has a steel microstructure where the area ratio of martensite to the entire microstructure is not less than 85% and less than 95%, the area ratio of ferrite to the entire microstructure is not less than 5% and not more than 15%, and the average crystal grain size of ferrite is 10 $\mu$m or less, and wherein the number density A of precipitates having an equivalent circular diameter of 500 nm or more satisfies the following formula (1):

$$A \ (number/mm^2) \ \leq \ 8.5 \ \times \ 10^5 \ \times \ [B] \qquad formula \ (1)$$

where [B] represents the content (mass %) of B.

[2] The steel sheet according to [1], wherein 50% or more, in terms of area ratio, of the ferrite is ferrite that has been precipitated on prior-austenite grain boundaries.
[3] The steel sheet according to [1] or [2], wherein the chemical composition further comprises, in mass %, one or more selected from the following:

Cu: not more than 1.00%;
Cr: not more than 1.00%;
Nb: not more than 0.10%;
Ti: not more than 0.10%;
V: not more than 0.50%;
Mo: not more than 0.50%;
Ni: not more than 1.00%;
Sb: not more than 0.10%;
Sn: not more than 0.10%;
As: not more than 0.10%;
Ta: not more than 0.10%;
Ca: not more than 0.020%;
Mg: not more than 0.020%;
Zn: not more than 0.020%;
Co: not more than 0.020%;
Zr: not more than 0.020%;
W: not more than 0.020%; and
REM: not more than 0.020%.

[4] The steel sheet according to any one of [1] to [3], having a coating layer on a surface of the steel sheet.
[5] A member using the steel sheet according to any one of [1] to [4].
[6] A method for producing a steel sheet, comprising:

holding a steel slab having the chemical composition according to [1] or [3] at a heating and holding temperature, which is a slab surface temperature, of 1100°C or higher for 30 minutes or more;
then subjecting the steel slab to hot finish rolling under the conditions of a residence time of not less than 20 seconds and not more than 150 seconds at 900 to 1000°C, and a finish rolling temperature of 850°C or higher;

cooling the rolled steel at an average cooling rate of 40°C/s or more in the range from the finish rolling temperature to 650°C;

then coiling the rolled steel at a coiling temperature of 650°C or lower to obtain a hot-rolled steel sheet;

subjecting the hot-rolled steel sheet to cold rolling at a rolling reduction of 40% or more to obtain a cold-rolled steel sheet; and

subjecting the cold-rolled steel sheet to continuous annealing by

heating the cold-rolled steel sheet from 400°C to an annealing temperature of 830 to 950°C at an average heating rate of 1.0°C/s or more,

holding the steel sheet at the annealing temperature for not less than 10 seconds and not more than 600 seconds,

then cooling the steel sheet from the annealing temperature to point $Ar_3$ at an average cooling rate of 10°C/s or more,

cooling the steel sheet from the point $Ar_3$ to (point $Ar_3$ - 80°C) at an average cooling rate of 1 to 10°C/s,

cooling the steel sheet from (point $Ar_3$ - 80°C) to a cooling stop temperature of 260°C or lower at an average cooling rate of 10°C/s or more, and

then holding the steel sheet at a holding temperature of 150 to 260°C for 20 to 1500 seconds.

[7] The method for producing a steel sheet according to [6], wherein the steel sheet after the continuous annealing is subjected to surface coating.

[8] A method for producing a member, comprising a step of subjecting the steel sheet according to any one of [1] to [4] to at least one of a forming process and a joining process.

Advantageous Effects of Invention

According to the present invention, there are provided a steel sheet and a member which have a high strength and excellent delayed fracture resistance, and a method for producing them.

Description of Embodiments

Embodiments of the present invention will now be described.

The steel sheet of the present invention has a chemical composition comprising, in mass %: C: not less than 0.15% and not more than 0.45%; Si: not more than 2.0%; Mn: not more than 4.0%; P: not more than 0.10%; S: not more than 0.01%; sol. Al: not more than 0.50%; N: not more than 0.01%; and B: not less than 0.0008% and not more than 0.0100%, with the balance being Fe and incidental impurities, wherein the steel sheet has a steel microstructure where the area ratio of martensite to the entire microstructure is not less than 85% and less than 95%, the area ratio of ferrite to the entire microstructure is not less than 5% and not more than 15%, and the average crystal grain size of ferrite is 10 $\mu$m or less, and wherein the number density A of precipitates having an equivalent circular diameter of 500 nm or more satisfies the following formula (1):

$$A \ (\text{number/mm}^2) \ \leq \ 8.5 \ \times \ 10^5 \ \times \ [B] \qquad \text{formula (1)}$$

where [B] represents the content (mass %) of B.

Chemical Composition

The reasons for the limitations of the chemical composition that the steel sheet of the present invention has will be described. The percentages relating to the contents of components refer to "mass %".

C: not less than 0.15% and not more than 0.45%

C is contained to increase the strength of martensite and obtain a tensile strength of 1470 MPa or more (hereinafter also expressed as TS ≥ 1470 MPa). Therefore, in order to obtain the desired TS, the content of C is made not less than 0.15%. The C content is preferably not less than 0.20%, more preferably not less than 0.25% from the viewpoint of reducing the weight of automotive frame parts by increasing the strength.

On the other hand, if C is added in excess, the formation of ferrite is excessively suppressed, and a desired area ratio of ferrite cannot be obtained. Therefore, the C content is made not more than 0.45%. The C content is preferably not more than 0.40%, more preferably not more than 0.35%.

Si: not more than 2.0%

Si suppresses the formation of a film-like carbide when the steel is tempered at a temperature in the range of not less than 200°C, thereby preventing reduction in strength and deterioration in delayed fracture resistance. While the lower limit of the Si content is not specified, Si is desirably contained in an amount of not less than 0.02%. The Si content is preferably not less than 0.10%, more preferably not less than 0.20%.

On the other hand, excessive addition of Si leads to deterioration in delayed fracture resistance due to segregation of Si. Therefore, the Si content is made not more than 2.0% (including 0%). The Si content is preferably not more than 1.5%, more preferably not more than 1.0%.

Mn: not more than 4.0%

Mn is an element which is effective in improving the hardenability of steel. While the lower limit of the Mn content is not specified, the Mn content is desirably not less than 0.2% in order to stably obtain the desired area ratio of martensite. The Mn content is preferably not less than 0.5%.

On the other hand, excessive addition of Mn leads to excessive suppression of the formation of ferrite, resulting in a failure to obtain the desired area ratio of ferrite. Therefore, the Mn content is made not more than 4.0%. The Mn content is preferably not more than 3.0%, more preferably not more than 1.7%.

P: not more than 0.10%

P segregates at grain boundaries and reduces the grain boundary strength, leading to deterioration in delayed fracture resistance. Therefore, the P content is made not more than 0.10%. The P content is preferably not more than 0.05%, more preferably not more than 0.02%, and even more preferably not more than 0.01%. While the lower limit of the P content is not specified, an industrially feasible lower limit is 0.002% at present. Therefore, the P content is preferably made not less than 0.002%.

S: not more than 0.01%

S, together with Mn, forms coarse inclusions which serve as the point of origin of delayed fracture, causing a deterioration in delayed fracture resistance. Therefore, the S content is made not more than 0.01%. The S content is preferably not more than 0.003%, more preferably not more than 0.0015%, and even more preferably not more than 0.0008%. While the lower limit is not specified, an industrially feasible lower limit is 0.0002% at present. Therefore, the S content is preferably made not less than 0.0002%.

sol. Al: not more than 0.50%

The inclusion of Al is to perform sufficient deoxidation and reduce inclusions in the steel. While the lower limit of sol. Al is not particularly specified, the sol. Al content is desirably made not less than 0.005% in order to perform deoxidation stably. The sol. Al content is more preferably not less than 0.01%, even more preferably not less than 0.02%.

On the other hand, if the sol. Al content exceeds 0.50%, cementite that has been formed during coiling hardly dissolves in an annealing process, and therefore the number density A of precipitates cannot be controlled within a desired range, resulting in significant deterioration in delayed fracture resistance. Therefore, the sol. Al content is made not more than 0.50%. The sol. Al content is preferably not more than 0.20%, more preferably not more than 0.05%.

N: not more than 0.010%

N forms precipitates, such as AlN, which serve as the point of origin of delayed fracture, causing deterioration in delayed fracture resistance. In particular, when N exceeds 0.010%, the number density A of precipitates cannot be controlled within a desired range, resulting in significant deterioration in delayed fracture resistance. Therefore, the N content is made not more than 0.010%. The N content is preferably not more than 0.005%. While the lower limit is not specified, an industrially feasible lower limit is 0.0006% at present. Therefore, the N content is preferably made not less than 0.0006%.

B: not less than 0.0008% and not more than 0.0100%

B is an element that improves the hardenability of steel, and has the effect of forming a predetermined area ratio of martensite even with a low Mn content. Further, B segregates at grain boundaries, thereby increasing the bonding strength of the grain boundaries and suppressing the segregation of P that reduces the grain boundary strength. In order to achieve the desired delayed fracture resistance through these actions, the B content is made not less than 0.0008%. The B content is preferably not less than 0.0015%, more preferably not less than 0.0020%.

On the other hand, it has been found that excessive addition of B leads to the formation of $Fe_{23}(C, B)_6$ or BN, serving as the point of origin of delayed fracture, and thus rather reduces delayed fracture resistance. Therefore, in order to achieve the effect of improving delayed fracture resistance by the addition of B, it is necessary to add B while controlling the number density A of precipitates within a desired range. If the B content exceeds 0.0100%, it is difficult to reduce B-based precipitates even through control of hot rolling conditions and annealing conditions, which may result in a failure to control the number density A of precipitates within the desired range. Therefore, the B content is made not more than 0.0100%. The B content is preferably not more than 0.0080%, more preferably not more than 0.0060%.

The chemical composition of the steel sheet according to the present invention comprises the above-described component elements as basic components, with the balance including iron (Fe) and incidental impurities. The steel sheet of the present invention preferably has a chemical composition comprising the above-described basic components, with the balance consisting of iron (Fe) and incidental impurities.

The chemical composition according to the present invention may comprise, in mass %, one or more selected from the following: Cu: not more than 1.00%; Cr: not more than 1.00%; Nb: not more than 0.10%; Ti: not more than 0.10%; V: not more than 0.50%; Mo: not more than 0.50%; Ni: not more than 1.00%; Sb: not more than 0.10%; Sn: not more than 0.10%; As: not more than 0.10%; Ta: not more than 0.10%; Ca: not more than 0.020%; Mg: not more than 0.020%; Zn: not more than 0.020%; Co: not more than 0.020%; Zr: not more than 0.020%; W: not more than 0.020%; and REM: not more than 0.020%.

Cu: not more than 1.00%

Cu has the effect of improving the corrosion resistance of the steel sheet, reducing penetration of hydrogen into the steel sheet, and improving the delayed fracture resistance. While the lower limit of the Cu content is not specified, in order to achieve such effects, the Cu content is desirably not less than 0.01%. The Cu content is preferably not less than 0.05%, more preferably not less than 0.10%.

On the other hand, excessive addition of Cu increases coarse precipitates, resulting in a failure to control the number density A of precipitates within the desired range and thus in deterioration of delayed fracture resistance. Therefore, when Cu is contained, the Cu content is made not more than 1.00%. The Cu content is preferably not more than 0.50%, more preferably not more than 0.30%.

Cr: not more than 1.00%

Cr is an element which is effective in improving the hardenability of steel. Cr can be added to stably obtain a desired microstructure. While the lower limit of the Cr content is not particularly specified, in order to achieve such effects, the Cr content is desirably not less than 0.01%. The Cr content is more preferably not less than 0.05%, and even more preferably not less than 0.10%.

On the other hand, if Cr is added in excess, dissolution of cementite during annealing will be delayed, and a large amount of undissolved cementite will remain, resulting in a failure to control the number density A of precipitates within the desired range and thus in deterioration of delayed fracture resistance. Therefore, when Cr is contained, the Cr content is made not more than 1.00%. The Cr content is preferably not more than 0.50%, more preferably not more than 0.30%.

Nb: not more than 0.10%

Nb forms fine precipitates such as NbC in the steel, thereby reducing the grain size of prior-austenite through a pinning effect and improving delayed fracture resistance. While the lower limit of the Nb content is not specified, in order to achieve the effect of improving delayed fracture resistance, the Nb content is desirably not less than 0.005%. The Nb content is preferably not less than 0.01%.

On the other hand, excessive addition of Nb increases coarse precipitates, resulting in a failure to control the number density A of precipitates within the desired range and thus in deterioration of delayed fracture resistance. Therefore, when Nb is contained, the Nb content is made not more than 0.10%. The Nb content is preferably not more than 0.08%, more preferably not more than 0.06%.

Ti: not more than 0.10%

Ti forms fine precipitates such as TiC in the steel, thereby reducing the grain size of prior-austenite through a pinning effect and improving delayed fracture resistance. While the lower limit of the Ti content is not specified, in order to achieve such effects, the Ti content is desirably not less than 0.005%. The Ti content is preferably not less than 0.01%.

On the other hand, excessive addition of Ti increases coarse precipitates, resulting in a failure to control the number density A of precipitates within the desired range and thus in deterioration of delayed fracture resistance. Therefore, when Ti is contained, the Ti content is made not more than 0.10%. The Ti content is preferably not more than 0.08%, more preferably not more than 0.06%.

V: not more than 0.50%

V has the effect of forming a fine V-containing carbide which serves as a hydrogen trap site, and improving delayed fracture resistance. Further, V forms fine precipitates, thereby reducing the grain size of prior-austenite through a pinning effect and improving delayed fracture resistance. While the lower limit of the V content is not specified, in order to achieve such effects, the V content is desirably not less than 0.003%. The V content is preferably not less than 0.01%, more preferably not less than 0.03%.

On the other hand, excessive addition of V increases coarse precipitates, resulting in a failure to control the number density A of precipitates within the desired range and thus in deterioration of delayed fracture resistance. Therefore, when V is contained, the V content is made not more than 0.50%. The V content is preferably not more than 0.20%, more preferably not more than 0.10%, and even more preferably not more than 0.06%.

Mo: not more than 0.50%

Mo has the effect of forming a fine Mo-containing carbide which serves as a hydrogen trap site, and improving delayed fracture resistance. Further, Mo forms fine precipitates, thereby reducing the grain size of prior-austenite through a pinning effect and improving delayed fracture resistance. While the lower limit of the Mo content is not specified, in order to achieve the effect of improving delayed fracture resistance, the Mo content is desirably not less than 0.003%. The Mo content is preferably not less than 0.01%, more preferably not less than 0.03%.

On the other hand, excessive addition of Mo increases coarse precipitates, resulting in a failure to control the number density A of precipitates within the desired range and thus in deterioration of delayed fracture resistance. Therefore, when Mo is contained, the Mo content is made not more than 0.50%. The Mo content is preferably not more than 0.20%, more preferably not more than 0.10%.

Ni: not more than 1.00%

Ni has the effect of improving the corrosion resistance of the steel sheet, reducing penetration of hydrogen into the steel sheet, and improving the delayed fracture resistance. Ni is an element which is effective in improving the hardenability of steel. Ni can be added to stably obtain a desired microstructure. While the lower limit of the Ni content is not specified, in order to achieve such effects, the Ni content is desirably not less than 0.01%. The Ni content is preferably not less than 0.05%, more preferably not less than 0.10%.

On the other hand, excessive addition of Ni increases coarse precipitates, resulting in a failure to control the number density A of precipitates within the desired range and thus in deterioration of delayed fracture resistance. Therefore, when Ni is contained, the Ni content is made not more than 1.00%. The Ni content is preferably not more than 0.50%, more preferably not more than 0.30%.

Sb: not more than 0.10%

Sb suppresses oxidation and nitridation of the surface of the steel sheet, thus contributing to increasing the strength and improving the delayed fracture resistance. While the lower limit of the Sb content is not specified, in order to achieve the effect of increasing strength and the effect of improving delayed fracture resistance, the Sb content is desirably not less than 0.002%. The Sb content is preferably not less than 0.004%, more preferably not less than 0.006%.

On the other hand, excessive addition of Sb increases coarse precipitates, resulting in a failure to control the number density A of precipitates within the desired range and thus in deterioration of delayed fracture resistance. Therefore, when Sb is contained, the Sb content is made not more than 0.10%. The Sb content is preferably not more than 0.05%, more preferably not more than 0.02%.

Sn: not more than 0.10%

Sn suppresses oxidation and nitridation of the surface of the steel sheet, thus contributing to increasing the strength and improving the delayed fracture resistance. While the lower limit of the Sn content is not specified, in order to achieve the effect of increasing strength and the effect of improving delayed fracture resistance, the Sn content is desirably not less than 0.002%. The Sn content is preferably not less than 0.004%, more preferably not less than 0.006%.

On the other hand, excessive addition of Sn increases coarse precipitates, resulting in a failure to control the number density A of precipitates within the desired range and thus in deterioration of delayed fracture resistance. Therefore, when Sn is contained, the Sn content is made not more than 0.10%. The Sn content is preferably not more than 0.05%, more preferably not more than 0.02%.

As: not more than 0.10%

As has the effect of increasing the strength of steel. While the lower limit of the As content is not specified, in order to achieve the effect of increasing the strength of steel, the As content is desirably not less than 0.002%. The As content is preferably not less than 0.004%, more preferably not less than 0.006%.

On the other hand, excessive addition of As increases coarse precipitates, resulting in a failure to control the number density A of precipitates within the desired range and thus in deterioration of delayed fracture resistance. Therefore, when As is contained, the As content is made not more than 0.10%. The As content is preferably not more than 0.05%, more preferably not more than 0.02%.

Ta: not more than 0.10%

Ta has the effect of increasing the strength of steel. While the lower limit of the Ta content is not specified, in order to achieve the effect of increasing the strength of steel, the Ta content is desirably not less than 0.002%. The Ta content is preferably not less than 0.004%, more preferably not less than 0.006%.

On the other hand, excessive addition of Ta increases coarse precipitates, resulting in a failure to control the number density A of precipitates within the desired range and thus in deterioration of delayed fracture resistance. Therefore, when Ta is contained, the Ta content is made not more than 0.10%. The Ta content is preferably not more than 0.05%, more preferably not more than 0.02%.

Ca: not more than 0.020%

Ca makes the shape of a sulfide spherical, thereby reducing the point of origin of delayed fracture and improving delayed fracture resistance. In order to achieve the effect of improving delayed fracture resistance, the Ca content is desirably not less than 0.0002%. The Ca content is preferably not less than 0.0005%, more preferably not less than 0.0010%.

On the other hand, excessive addition of Ca increases coarse precipitates, resulting in a failure to control the number density A of precipitates within the desired range and thus in deterioration of delayed fracture resistance. Therefore, when Ca is contained, the Ca content is made not more than 0.020%. The Ca content is preferably not more than 0.015%, more preferably not more than 0.010%.

Mg: not more than 0.020%

Mg makes the shape of a sulfide spherical, thereby reducing the point of origin of delayed fracture and improving delayed fracture resistance. In order to achieve the effect of improving delayed fracture resistance, the Mg content is desirably not less than 0.0002%. The Mg content is preferably not less than 0.001%, more preferably not less than 0.003%.

On the other hand, excessive addition of Mg increases coarse precipitates, resulting in a failure to control the number density A of precipitates within the desired range and thus in deterioration of delayed fracture resistance. Therefore, when Mg is contained, the Mg content is made not more than 0.020%. The Mg content is preferably not more than 0.015%, more preferably not more than 0.010%.

Zn: not more than 0.020%

Zn improves delayed fracture resistance by reducing the grain size of prior-austenite and by making the shape of inclusions spherical. In order to achieve the effect of improving delayed fracture resistance, the Zn content is desirably not less than 0.001%. The Zn content is preferably not less than 0.003%.

On the other hand, excessive addition of Zn increases coarse precipitates, resulting in a failure to control the number density A of precipitates within the desired range and thus in deterioration of delayed fracture resistance. Therefore, when Zn is contained, the Zn content is made not more than 0.020%. The Zn content is preferably not more than 0.015%, more preferably not more than 0.010%.

Co: not more than 0.020%

Co improves delayed fracture resistance by reducing the grain size of prior-austenite and by making the shape of inclusions spherical. In order to achieve the effect of improving delayed fracture resistance, the Co content is desirably not less than 0.001%. The Co content is preferably not less than 0.003%.

On the other hand, excessive addition of Co increases coarse precipitates, resulting in a failure to control the number density A of precipitates within the desired range and thus in deterioration of delayed fracture resistance. Therefore, when Co is contained, the Co content is made not more than 0.020%. The Co content is preferably not more than 0.015%, more preferably not more than 0.010%.

Zr: not more than 0.020%

Zr improves delayed fracture resistance by reducing the grain size of prior-austenite and by making the shape of inclusions spherical. In order to achieve the effect of improving delayed fracture resistance, the Zr content is desirably not less than 0.001%. The Zr content is preferably not less than 0.003%.

On the other hand, excessive addition of Zr increases coarse precipitates, resulting in a failure to control the number density A of precipitates within the desired range and thus in deterioration of delayed fracture resistance. Therefore, when Zr is contained, the Zr content is made not more than 0.020%. The Zr content is preferably not more than 0.015%, more preferably not more than 0.010%.

W: not more than 0.020%

W improves delayed fracture resistance by reducing the grain size of prior-austenite through the formation of precipitates. In order to achieve the effect of improving delayed fracture resistance, the W content is desirably not less than 0.001%. The W content is preferably not less than 0.003%.

On the other hand, excessive addition of W increases coarse precipitates, resulting in a failure to control the number density A of precipitates within the desired range and thus in deterioration of delayed fracture resistance. Therefore, when W is contained, the W content is made not more than 0.020%. The W content is preferably not more than 0.015%, more preferably not more than 0.010%.

REM: not more than 0.020%

REM also contributes to improving delayed fracture resistance by making inclusions spherical. In order to achieve the effect of improving delayed fracture resistance, the REM content is desirably not less than 0.0002%. The REM content is preferably not less than 0.001%, more preferably not less than 0.003%.

On the other hand, excessive addition of REM increases coarse precipitates, resulting in a failure to control the number density A of precipitates within the desired range and thus in deterioration of delayed fracture resistance. Therefore, when REM is contained, the REM content is made not more than 0.020%. The REM content is preferably not more than 0.015%, more preferably not more than 0.010%.

In the present invention, REM refers to scandium (Sc) of atomic number 21, yttrium (Y) of atomic number 39, and lanthanoids from lanthanum (La) of atomic number 57 to lutetium (Lu) of atomic number 71. In the present invention, the REM concentration refers to the total content of one or more elements selected from the REM elements. While there is no particular limitation on REM, it is preferably La and/or Ce.

When any of the above-described optional elements is contained in an amount less than the preferred lower limit, such an optional element is regarded as being contained as an incidental impurity.

Steel Microstructure

The steel microstructure of the steel sheet of the present invention has the following features.

(Feature 1) The area ratio of martensite to the entire microstructure is not less than 85% and less than 95%, the area ratio of ferrite to the entire microstructure is not less than 5% and not more than 15%, and the average crystal grain size of ferrite is 10 μm or less.

(Feature 2) The number density A of precipitates having an equivalent circular diameter of 500 nm or more satisfies the following formula (1):

$$A \text{ (number/mm}^2) \leq 8.5 \times 10^5 \times [B] \qquad \text{formula (1)}$$

where [B] represents the content (mass %) of B.

When the steel microstructure has the following feature in addition to Feature 1 and Feature 2, the steel sheet can have superior delayed fracture resistance.

(Feature 3) 50% or more, in terms of area ratio, of the ferrite is ferrite that has been precipitated on prior-austenite grain boundaries.

The respective features will now be described.

(Feature 1) The area ratio of martensite: not less than 85% and less than 95%; the area ratio of ferrite: not less than 5% and not more than 15%; and the average crystal grain size of ferrite: 10 $\mu$m or less

The use of martensite as a main phase according to the present invention makes it possible to achieve a high strength of TS $\geq$ 1470 MPa. In order to achieve such a high strength, the area ratio of martensite needs to be made not less than 85%. The area ratio of martensite is preferably not less than 88%.

Further, it has been found that excellent delayed fracture resistance can be obtained by using martensite as a main phase and forming ferrite at an area ratio of not less than 5% and not more than 15%. In order to obtain excellent delayed fracture resistance, the area ratio of martensite is made less than 95%, and the area ratio of ferrite is made not less than 5%. The area ratio of martensite is preferably less than 93%, and the area ratio of ferrite is preferably not less than 7%.

On the other hand, excessive formation of ferrite reduces the strength and deteriorates the delayed fracture resistance. Thus, in order to stably achieve TS $\geq$ 1470 MPa and excellent delayed fracture resistance, the area ratio of ferrite is made not more than 15%. The area ratio of ferrite is preferably not more than 12%.

Further, in the present invention, the morphology of ferrite is also controlled in order to achieve the effect of improving delayed fracture resistance by 5% to 15% ferrite. If the ferrite is coarse, the effect of improving delayed fracture resistance will not be achieved; the formation of such ferrite will rather deteriorate the delayed fracture resistance. In order to achieve the effect of improving delayed fracture resistance by ferrite, the average crystal grain size of ferrite is made 10 $\mu$m or less. The average crystal grain size of ferrite is preferably 6 $\mu$m or less, more preferably 4 $\mu$m or less.

On the other hand, if the ferrite is excessively fine, the effect of improving delayed fracture resistance may sometimes be insufficient. Therefore, the average crystal grain size of ferrite is preferably 0.5 $\mu$m or more, more preferably 1.0 $\mu$m or more.

When the steel contains structures other than martensite and ferrite, the balance of the steel microstructure is preferably composed of bainite, retained austenite (residual $\gamma$), and/or pearlite. Besides these structures, the steel may contain a trace amount of a carbide, a sulfide, a nitride, and/or an oxide. The area ratio of the balance of the microstructure may be 10% or less, preferably 5% or less, and more preferably 3% or less.

The area ratio of the balance of the microstructure may be 0%; that is, the steel microstructure may consist of martensite and ferrite.

The martensite includes martensite that has undergone self-tempering during continuous cooling, and also includes martensite that has not undergone tempering by residence at about 150°C or higher for a certain period of time.

(Feature 2) The number density A of precipitates having an equivalent circular diameter of 500 nm or more satisfies the following formula (1):

$$\text{A (number/mm}^2) \leq 8.5 \times 10^5 \times [B] \qquad \text{formula (1)}$$

where [B] represents the content (mass %) of B.

In order to prevent delayed fracture in steel having a high strength of TS $\geq$ 1470 MPa, in addition to the control of the area ratios of martensite and ferrite and the control of the average crystal grain size of ferrite, it is necessary to strengthen grain boundaries with B and prevent fracture at the grain boundaries. However, it has been found that a mere increase in the B content not only increases the amount of B segregated at the grain boundaries but also increases B-based precipitates, composed mainly of $Fe_{23}(C, B)_6$, which serve as the point of origin of delayed fracture, and therefore rather reduces the delayed fracture resistance. The present inventors have found that it is possible to improve delayed fracture resistance through strengthening of grain boundaries with B and prevent fracture originating from precipitates by reducing the number density A of precipitates having an equivalent circular diameter of 500 nm or more through control of the hot rolling conditions, etc., thereby achieving the following condition: A (number/mm$^2$) $\leq$ 8.5 $\times$ 10$^5$ $\times$ [B].

The number density A of precipitates preferably satisfies the condition: A (number/mm$^2$) $\leq$ 6.5 $\times$ 10$^5$ $\times$ [B], more preferably satisfies the condition: A (number/mm$^2$) $\leq$ 5.0 $\times$ 10$^5$ $\times$ [B].

In the present invention, the lower limit of A is not particularly limited; A may be 0, or A may satisfy the condition: A

(number/mm$^2$) $\geq 0.5 \times 10^5 \times$ [B].

(Feature 3) 50% or more, in terms of area ratio, of the ferrite is ferrite that has been precipitated on prior-austenite grain boundaries.

Main methods for dispersing ferrite in martensite include a method which involves holding austenite and ferrite in their two-phase region, and then transforming the austenite into martensite by quenching, and a method which involves holding austenite in its single-phase region, then holding it in a ferrite formation temperature range to form ferrite, followed by quenching to transform the remaining austenite into martensite.

The ferrite, formed by holding austenite in the single-phase region and then holding it in a ferrite formation temperature range, is called pro-eutectoid ferrite. Such ferrite is formed preferentially at grain boundaries and prevents grain boundary fracture, and thus has a significant effect of improving delayed fracture resistance. By making the area ratio of ferrite, which has been precipitated on prior-austenite grain boundaries, to the entire ferrite 50% or more, a remarkable improvement in delayed fracture resistance can be achieved. Therefore, the area ratio of ferrite which has been precipitated on prior-austenite grain boundaries to the entire ferrite is desirably 50% or more. The area ratio of ferrite which has been precipitated on prior-austenite grain boundaries to the entire ferrite is preferably 70% or more, more preferably 90% or more. The area ratio of ferrite which has been precipitated on prior-austenite grain boundaries to the entire ferrite may be 100%.

Methods for measuring the above-described parameters of the steel microstructure will now be described.

The area ratios of martensite, bainite, and ferrite can be measured by the following method. An L-section of a steel sheet (a cross-section parallel to the rolling direction and perpendicular to a steel sheet surface (hereinafter also referred to as a perpendicular cross-section parallel to the rolling direction)) is polished and then corroded with Nital. The cross-section is observed by SEM at 2000-fold magnification in four fields of view, each field having a scope of 50 $\mu$m $\times$ 65 $\mu$m, at a position at a distance of 1/4 of the sheet thickness from the steel sheet surface, and microstructure photographs are subjected to image analysis for measurement of the area ratios. In the SEM observation, martensite and bainite are gray- or white-colored structures. On the other hand, ferrite is a black-colored region in SEM. Martensite and bainite contain trace amounts of a carbide, a nitride, a sulfide, and an oxide, which are difficult to remove. The area ratio of martensite or bainite refers to the area ratio of a region containing such substances.

Bainite has the following features. Bainite is a structure which has a plate-like shape with an aspect ratio of 2.5 or more and which is slightly blackish as compared to martensite. The width of the plate-like shape is 0.3 to 1.7 $\mu$m. The density of carbide particles having a diameter of 10 to 200 nm, distributed in the bainite, is 0-3/$\mu$m$^2$.

Retained austenite (retained $\gamma$) can be measured as follows. The surface of a steel sheet is chemically polished by a thickness of 200 $\mu$m with oxalic acid, and the polished sheet surface is subjected to X-ray diffractometry. The amount of retained $\gamma$ is calculated from the integrated intensity of the peaks of diffraction planes (200)$\alpha$, (211)$\alpha$, (220)$\alpha$, (200)$\gamma$, (220)$\gamma$, and (311)$\gamma$, measured using Mo-K$\alpha$ radiation.

The average crystal grain size of ferrite can be measured by the following method. An L-section of a steel sheet (a perpendicular cross-section parallel to the rolling direction) is polished and then corroded with Nital. The cross-section is observed by SEM at 2000-fold magnification in 10 fields of view, each field having a scope of 50 $\mu$m $\times$ 65 $\mu$m, at a position at a distance of 1/4 of the sheet thickness from a steel sheet surface, and microstructure photographs are subjected to image analysis to determine an equivalent circular diameter. Equivalent circular diameter refers to the diameter of a perfect circle having the area of a region which is identified as ferrite from an SEM photograph. A value obtained by dividing the sum of the diameters in the 10 fields of view by the number of ferrite regions, for which the diameters have been measured, is taken as the average crystal grain size of ferrite.

The area ratio of ferrite precipitated on prior-austenite grain boundaries can be measured by the following method.

First, an L-section of a steel sheet is mirror-polished by vibratory polishing in colloidal silica, and then the cross-section is subjected to electron backscatter diffraction (EBSD) measurement to obtain local crystal orientation data for 10 fields of view at a position at a distance of 1/4 of the sheet thickness from a steel sheet surface. The step size is set to be 0.10 $\mu$m, and the measurement area is set to be 50 $\mu$m $\times$ 50 $\mu$m. After cleanup processing is performed using analysis software OIM Analysis 7, the local crystal orientation data is analyzed to determine prior-austenite grain boundaries.

The cleanup processing involves replacing the orientation and CI value of a pixel having a CI value of 0.2 or less with those of a pixel which, among adjacent pixels, has the highest CI value.

In particular, cleanup processing is performed using the Neighbor CI Correlation function of the analysis software under a condition where a minimum confidence index parameter is set to 0.2.

A map of grain boundaries having a crystal orientation difference of not less than 20° and not more than 50° in terms of rotation angle is created, and the interfaces are determined to be prior-austenite grain boundaries.

After the EBSD measurement, the L-section of the steel sheet is corroded with Nital, and the same 10 fields of view as those used in the EBSD measurement are imaged by SEM at 3000-fold magnification. Each SEM image is superimposed on the map of prior-austenite grain boundaries in the same field of view, and ferrite present on the prior-austenite grain boundaries is identified, and the area ratio of such ferrite is measured.

One method for observing the same field of view with EBSD and SEM is to make an indentation with a Vickers hardness tester at an observation position on the steel sheet in advance, and use it as a marker for the observation position.

The number density A of precipitates having an equivalent circular diameter of 500 nm or more can be determined by the following method. An L-section of a steel sheet (a perpendicular cross-section parallel to the rolling direction) is polished, and then a 2-mm$^2$ area of the cross-section is continuously imaged by SEM, the area ranging from a 1/5 sheet thickness position to a 4/5 sheet thickness position, i.e. ranging from a position at a distance of 1/5 of the sheet thickness from a steel sheet surface, across the center position in the sheet thickness direction, to a position at a distance of 4/5 of the sheet thickness from the steel sheet surface. The number of such precipitates is measured from the SEM photographs. The imaging magnification is 2000 times. When a component analysis of an individual inclusion particle is performed, the analysis of the particle is performed at a magnification of 10000 times. Here, precipitates having an equivalent circular diameter of 500 nm or more are B-containing precipitates such as $Fe_{23}(C, B)_6$. The presence or absence of a B peak is examined by elemental analysis using energy dispersive X-ray spectroscopy (EDS) at an acceleration voltage of 3 kV. When a B peak is present, it indicates the presence of such B-containing precipitates.

The equivalent circular diameter refers to the diameter of a perfect circle having the area of each precipitate calculated from an SEM photograph.

Tensile strength (TS): 1470 MPa or more

A steel sheet having a high tensile strength of 1470 MPa or more generally has a very poor delayed fracture resistance. In this respect, one feature of the present invention resides in that the present steel sheet has good delayed fracture resistance even when its tensile strength is 1470 MPa or more. The tensile strength is preferably 1700 MPa or more from the viewpoint of weight reduction of automotive frame parts.

The tensile strength of the steel sheet of the present invention may be made 2100 MPa or less. The tensile strength of the steel sheet of the present invention may be made 1900 MPa or less. Further, the tensile strength of the steel sheet of the present invention may be made 1800 MPa or less. The steel sheet of the present invention can achieve extremely excellent delayed fracture resistance when the tensile strength is 1800 MPa or less. The steel sheet of the present invention, even when its tensile strength is more than 1800 MPa and not more than 1900 MPa, can achieve extremely excellent delayed fracture resistance by making the area ratio of ferrite that has been precipitated on prior-austenite grain boundaries to the entire ferrite 50% or more.

The tensile strength can be measured by a tensile test according to JIS Z 2241 (2022) using a JIS No. 5 tensile test piece which has been cut out from a steel coil at a 1/4 coil width position such that the longitudinal direction coincides with a direction perpendicular to the rolling direction.

The steel sheet of the present invention may be a steel sheet having a coating layer on the surface. The coating layer may be a Zn coating layer or a plating layer of another metal. The coating layer may be either a hot-dip coating layer or an electroplating layer.

A method for producing a steel sheet according to the present invention will now be described.

The method for producing a steel sheet of the present invention comprises: holding a steel slab having the above-described chemical composition at a heating and holding temperature, which is a slab surface temperature, of 1100°C or higher for 30 minutes or more; then subjecting the steel slab to hot finish rolling under the conditions of a residence time of not less than 20 seconds and not more than 150 seconds at 900 to 1000°C, and a finish rolling temperature of 850°C or higher; cooling the rolled steel sheet at an average cooling rate of 40°C/s or more in the range from the finish rolling temperature to 650°C; then coiling the cooled steel sheet at a coiling temperature of 650°C or lower to obtain a hot-rolled steel sheet; subjecting the hot-rolled steel sheet to cold rolling at a rolling reduction of 40% or more to obtain a cold-rolled steel sheet; and subjecting the cold-rolled steel sheet to continuous annealing by heating the cold-rolled steel sheet from 400°C to an annealing temperature of 830 to 950°C at an average heating rate of 1.0°C/s or more, holding the steel sheet at the annealing temperature for not less than 10 seconds and not more than 600 seconds, then cooling the steel sheet from the annealing temperature to point $Ar_3$ at an average cooling rate of 10°C/s or more, cooling the steel sheet from the point $Ar_3$ to (point $Ar_3$ - 80°C) at an average cooling rate of 1 to 10°C/s, cooling the steel sheet from (point $Ar_3$ - 80°C) to a cooling stop temperature of 260°C or lower at an average cooling rate of 10°C/s or more, and then holding the steel sheet at a holding temperature of 150 to 260°C for 20 to 1500 seconds.

In the present invention, the temperature specified in each step refers to the surface temperature of the slab (steel slab) or the steel sheet.

Hot Rolling

Heating and holding temperature: slab surface temperature of 1100°C or higher

Heating and holding time (slab heating and holding time): 30 minutes or more

In the slab heating before hot rolling, the steel slab is held at a heating and holding temperature (slab heating and holding temperature), which is a slab surface temperature, of 1100°C or higher for 30 minutes or more to promote dissolution of precipitates such as B-based precipitates, thereby reducing the size and number of precipitates. The heating and holding temperature is preferably 1150°C or higher. The heating and holding temperature is preferably 1250°C or lower.

The time for holding the slab at the heating and holding temperature (holding time (slab heating and holding time)) is preferably 40 minutes or more. The holding time is preferably 50 minutes or less.

Residence time at 900 to 1000°C: not less than 20 seconds and not more than 150 seconds

In the hot rolling, the slab is allowed to reside at 900 to 1000°C for not less than 20 seconds and not more than 150 seconds. Increasing the residence time at a temperature in the temperature range of 900 to 1000°C leads to the formation of precipitates composed mainly of BN and to coarsening of the precipitates. Precipitates that have been formed in such a temperature range are hardly dissolved by heat annealing, resulting in a reduction in the amount of dissolved B after annealing. If the residence time exceeds 150 seconds, it will not be possible to obtain an amount of dissolved B which is effective in preventing delayed fracture. Therefore, the residence time is 150 seconds or less, preferably 120 seconds or less, and more preferably 100 seconds or less.

On the other hand, if the residence time is less than 20 seconds, the microstructure may become non-uniform. Therefore, the residence time is 20 seconds or more. The residence time is preferably 30 seconds or more.

Finish rolling temperature: 850°C or higher

In the hot finish rolling, the finish rolling temperature (FT) is made 850°C or higher to reduce nonuniformity of the hot-rolled microstructure. The finish rolling temperature is preferably 870°C or higher.

The finish rolling temperature is preferably 930°C or lower.

Average cooling rate (first average cooling rate) in the range from the finish rolling temperature to 650°C: 40°C/s or more

In the cooling after the hot finish rolling, the average cooling rate in the range from the finish rolling temperature to 650°C is made 40°C/s or more. In the temperature range from the finish rolling temperature to 650°C, as austenite recrystallizes, B segregates at grain boundaries and $Fe_{23}(C, B)_6$ precipitates. In order to prevent the precipitation of $Fe_{23}(C, B)_6$ as much as possible, the average cooling rate (first average cooling rate) is made 40°C/s or more. The average cooling rate is preferably 60°C/s or more.

The average cooling rate is preferably 500°C/s or less, more preferably 300°C/s or less.

The average cooling rate (first average cooling rate) in the hot rolling step refers to "(temperature at the start of cooling (finish rolling temperature) (°C) - temperature at the end of cooling (°C) (650°C))/cooling time (s) from the start of cooling to the end of cooling".

Coiling temperature: 650°C or lower

After the above cooling to 650°C, additional cooling is performed as necessary prior to coiling. If the coiling temperature exceeds 650°C, the precipitation of $Fe_{23}(C, B)_6$ is promoted, leading to deterioration in delayed fracture resistance. Therefore, the coiling temperature is made 650°C or lower. The coiling temperature is preferably 600°C or lower. Further, the coiling temperature is preferably 500°C or higher.

Cold Rolling

Rolling reduction: 40% or more

If the rolling reduction (cumulative rolling reduction (cold rolling ratio)) is made 40% or more in the cold rolling, the recrystallization behavior and texture orientation in the subsequent continuous annealing can be stabilized. If the rolling reduction is less than 40%, some of austenite grains may become coarse during annealing, resulting in a reduction in the strength. The rolling reduction is preferably 80% or less.

Continuous Annealing

Average heating rate during heating from 400°C to the annealing temperature: 1.0°C/s or more

The steel sheet after cold rolling is subjected to annealing and tempering in a continuous annealing line (CAL), and is further subjected to temper rolling as necessary.

$Fe_{23}(C, B)_6$ is formed and coarsens in a ferrite region during heat annealing. In order to reduce $Fe_{23}(C, B)_6$ and fully achieve the grain boundary strengthening effect of B, it is necessary to increase the average heating rate during heating from 400°C to the annealing temperature. From this viewpoint, the average heating rate at 400°C or higher is 1.0°C/s or more. The average heating rate during heating from 400°C to the annealing temperature is preferably 1.5°C/s or more, more preferably 3.0°C/s or more. Further, the average heating rate is preferably 10°C/s or less.

The average heating rate refers to "(the below-described annealing temperature (°C) - 400 (°C))/heating time (min) from 400°C to the annealing temperature".

Annealing temperature: 830 to 950°C

Soaking time (holding time at annealing temperature): not less than 10 seconds and not more than 600 seconds

In order to sufficiently reduce precipitates such as $Fe_{23}(C, B)_6$ that remain undissolved after annealing, annealing is performed at a high temperature for a long time. In particular, the annealing temperature needs to be made 830°C or higher. The annealing temperature is preferably 840°C or higher, more preferably 850°C or higher.

On the other hand, annealing at a temperature above 950°C coarsens prior-austenite grains, and also coarsens ferrite grains formed subsequently. Thus, a desired average crystal grain size of ferrite cannot be obtained when the annealing temperature exceeds 950°C; therefore, the annealing temperature is made 950°C or lower. The annealing temperature is preferably 900°C or lower.

An excessively long soaking time (holding time) also leads to coarsening of prior-austenite grains, and to an increase in the average crystal grain size of ferrite. Therefore, the soaking time is made 600 seconds or less. The soaking time is preferably 540 seconds or less, more preferably 480 seconds or less.

On the other hand, in order to sufficiently reduce precipitates such as $Fe_{23}(C, B)_6$ that remain undissolved, the soaking time is made 10 seconds or more. The soaking time is preferably 30 seconds or more, more preferably 60 seconds or more.

Average cooling rate (second average cooling rate) during cooling from the annealing temperature to point $Ar_3$: 10°C/s or more

Average cooling rate (third average cooling rate) during cooling from point $Ar_3$ to (point $Ar_3$ - 80°C): 1 to 10°C/s Average cooling rate (fourth average cooling rate) during cooling from (point $Ar_3$ - 80°C) to a cooling stop temperature of 260°C or lower: 10°C/s or more

In order to obtain a microstructure where the area ratio of martensite is not less than 85% and less than 95%, and the area ratio of ferrite is not less than 5% and not more than 15% while controlling the number density A of precipitates within the desired range, the steel sheet is cooled from the annealing temperature to the point $Ar_3$ (°C) at an average cooling rate (second average cooling rate) of 10°C/s or more, cooled from the point $Ar_3$ (°C) to (point $Ar_3$ - 80°C) at an average cooling rate (third average cooling rate) of 1 to 10°C/s, and cooled from (point $Ar_3$ - 80°C) to a cooling stop temperature of 260°C or lower at an average cooling rate (fourth average cooling rate) of 10°C/s or more.

Here, the second average cooling rate refers to "(annealing temperature (°C) - point $Ar_3$ (°C))/cooling time (s) from the annealing temperature to point $Ar_3$".

The third average cooling rate refers to "(point $Ar_3$ (°C) - (point $Ar_3$ - 80) (°C))/cooling time (s) from point $Ar_3$ (°C) to (point $Ar_3$ - 80) (°C)".

The fourth average cooling rate refers to "((point $Ar_3$ - 80) (°C) - cooling stop temperature (°C) of 260°C or lower)/cooling time (s) from (point $Ar_3$ - 80°C) to the cooling stop temperature of 260°C or lower".

The point $Ar_3$ can be calculated by the following equation:
Point $Ar_3$ (°C) = 910 - 310 × C - 80 × Mn - 20 × Cu - 15 × Cr - 55 × Ni - 80 × Mo, where the element symbols each represent the content (mass %) of the element. An element(s) which is not contained is assigned 0 (zero).

If the average cooling rate (second average cooling rate) during cooling from the annealing temperature to the point $Ar_3$ is less than 10°C/s, $Fe_{23}(C, B)_6$ is formed in excess, resulting in deterioration in delayed fracture resistance. Therefore, the average cooling rate during cooling from the annealing temperature to the point $Ar_3$ is made 10°C/s or more.

The second average cooling rate is preferably 20°C/s or more, more preferably 30°C/s or more.

The second average cooling rate is preferably 150°C/s or less, more preferably 100°C/s or less.

If the average cooling rate (third average cooling rate) during cooling from the point $Ar_3$ to (point $Ar_3$ - 80°C)

exceeds 10°C/s, ferrite is not formed sufficiently, resulting in deterioration in delayed fracture resistance. Therefore, the average cooling rate (third average cooling rate) during cooling from the point $Ar_3$ to (point $Ar_3$ - 80°C) is made 10°C/s or less. On the other hand, if the average cooling rate (third average cooling rate) during cooling from the point $Ar_3$ to (point $Ar_3$ - 80°C) is less than 1°C/s, ferrite is formed in excess. Therefore, the average cooling rate (third average cooling rate) during cooling from the point $Ar_3$ to (point $Ar_3$ - 80°C) is made 1°C/s or more. The third average cooling rate is preferably 3°C/s or more, more preferably 5°C/s or more.

If the average cooling rate (fourth average cooling rate) during cooling from (point $Ar_3$ - 80°C) to the cooling stop temperature of 260°C or lower is less than 10°C/s, a large amount of bainite, ferrite and pearlite will be formed, resulting in a failure to obtain sufficient strength and delayed fracture resistance. Therefore, the average cooling rate during cooling from (point $Ar_3$ - 80°C) to 260°C or lower is made 10°C/s or more. The fourth average cooling rate is preferably 70°C/s or more. The fourth average cooling rate is more preferably 100°C/s or more, and even more preferably 200°C/s or more.

The fourth average cooling rate is preferably 1000°C/s or less, more preferably 750°C/s or less.

If the cooling stop temperature exceeds 260°C, upper bainite and lower bainite will be formed, and retained austenite and fresh martensite will increase, resulting in a failure to obtain sufficient delayed fracture resistance. Therefore, the cooling stop temperature is made 260°C or lower. The cooling stop temperature is preferably 250°C or lower, more preferably 240°C or lower.

Holding temperature: 150 to 260°C

Holding time: 20 to 1500 seconds

Carbides distributed in martensite are formed when the steel sheet is held in a low temperature range after quenching. In order to ensure excellent delayed fracture resistance and a tensile strength of 1470 MPa or more ($TS \geq 1470$ MPa), it is necessary to appropriately control the formation of the carbides. To this end, it is necessary to control the holding temperature in the range of 150 to 260°C and the holding time in the range of 20 to 1500 seconds.

If the holding temperature is lower than the lower limit 150°C, or the holding time is short, the density of carbides distributed in a transformation phase will be insufficient, resulting in deterioration in delayed fracture resistance.

On the other hand, if the holding temperature is higher than the upper limit 260°C, the coarsening of carbides in grains and at block grain boundaries may be remarkable, resulting in deterioration in delayed fracture resistance. If the holding time exceeds 1500 seconds, the coarsening of carbides in grains and at block grain boundaries may be remarkable, resulting in deterioration in delayed fracture resistance. Therefore, in the present invention, the steel sheet is held at a holding temperature of 150 to 260°C for 20 to 1500 seconds in the continuous annealing.

The holding temperature is preferably 250°C or lower, more preferably 240°C or lower.

The holding time is preferably 50 seconds or more, more preferably 100 seconds or more.

The holding time is preferably 1300 seconds or less, more preferably 1000 seconds or less.

The steel sheet thus obtained can be subjected to skin pass rolling from the viewpoint of stabilizing press formability through adjustment of the surface roughness, flattening of the sheet shape, etc. The rate of skin pass elongation is preferably made 0.1% or more. Further, the rate of skin pass elongation is preferably made 1.0% or less. It is preferred to use a dull roll as a skin pass roll, and to adjust the roughness Ra of the steel sheet to 0.8 μm or more from the viewpoint of shape flattening. Further, the roughness Ra of the steel sheet is preferably adjusted to 1.8 μm or less.

The steel sheet may be coated. Thus, after the continuous annealing, the surface of the steel sheet may be subjected to a coating process. A steel sheet having a coating layer on the surface can be obtained by the coating process.

As described hereinabove, the present invention makes it possible to significantly improve the delayed fracture resistance of a high-strength cold-rolled steel sheet and, through the application of such an improved high-strength steel sheet, contribute to enhancing the strength of parts and reducing their weight. The steel sheet of the present invention preferably has a thickness of 0.5 mm or more. Further, the steel sheet preferably has a thickness of 2.0 mm or less.

A member according to the present invention and a method for producing the same will now be described.

The member of the present invention is obtained by subjecting the steel sheet of the present invention to at least one of a forming process and a joining process. A method for producing the member of the present invention comprises a step of subjecting the steel sheet of the present invention to at least one of a forming process and a joining process.

The steel sheet of the present invention has a tensile strength of 1470 MPa or more, and has excellent delayed fracture resistance. Therefore, the member of the present invention, obtained by using the steel sheet of the present invention, also has high strength and is superior in delayed fracture resistance to conventional high-strength members. Furthermore, the use of the member of the present invention allows for a weight reduction. Therefore, the member of the present invention can advantageously be used, for example, for vehicle frame parts.

The forming process can be performed by using, without restrictions, a common forming method such as press forming. The joining process can be performed by using, without restrictions, a common welding method such as spot welding or arc welding, riveting, crimping, etc.

EXAMPLES

Examples of the present invention will now be described.

Molten steels having the chemical compositions shown in Table 1 were prepared and each cast into a slab.

The slab was subjected to the heat treatment and rolling shown in Table 2 to obtain a steel sheet having a thickness of 1.4 mm.

In particular, slabs having their respective chemical compositions were each held at the heating and holding temperature shown in Table 2 for the heating and holding time shown in Table **2,** and then subjected to hot finish rolling under the conditions of: the residence time shown in Table 2 at 900 to 1000°C; and the finish rolling temperature shown in Table 2. The rolled steel was then cooled at the first average cooling rate shown in Table **2,** and coiled at the coiling temperature shown in Table 2 to obtain a hot-rolled steel sheet.

Thereafter, the hot-rolled steel sheet was cold-rolled at the rolling reduction (cold rolling reduction) shown in Table 2 to obtain a cold-rolled steel sheet.

Thereafter, the cold-rolled steel sheet was subjected to continuous annealing by heating the cold-rolled steel sheet to the annealing temperature shown in Table 2 at the average heating rate shown in Table **2,** holding the steel sheet for the soaking time shown in Table **2,** then cooling the steel sheet to 260°C or lower under the cooling conditions (second average cooling rate, third average cooling rate, fourth average cooling rate, cooling stop temperature) shown in Table **2,** reheating the steel sheet as necessary, and holding the steel sheet at the holding temperature shown in Table 2 for the holding time shown in Table 2.

With reference to steel sheet No. 2, the resulting steel sheet was subjected to electroplating to obtain a steel sheet having a Zn coating layer.

[Table 1]

| Steel species | Chemical composition (mass %) | | | | | | | | | Remarks |
|---|---|---|---|---|---|---|---|---|---|---|
| | C | Si | Mn | P | S | sol. Al | N | B | others | |
| A | 0.29 | 0.9 | 0.9 | 0.007 | 0.0005 | 0.068 | 0.0049 | 0.0043 | - | Suitable |
| B | 0.33 | 0.3 | 1.0 | 0.004 | 0.0002 | 0.084 | 0.0036 | 0.0049 | - | Suitable |
| C | 0.34 | 0.9 | 1.1 | 0.008 | 0.0004 | 0.044 | 0.0022 | 0.0037 | Cu:0.15 | Suitable |
| D | 0.34 | 0.5 | 1.4 | 0.005 | 0.0003 | 0.074 | 0.0041 | 0.0058 | Cr:0.15 | Suitable |
| E | 0.30 | 0.9 | 0.6 | 0.009 | 0.0005 | 0.055 | 0.0041 | 0.0034 | Nb:0.020 | Suitable |
| F | 0.31 | 0.6 | 0.6 | 0.007 | 0.0005 | 0.037 | 0.0032 | 0.0047 | Ti:0.020 | Suitable |
| G | 0.27 | 0.6 | 1.4 | 0.004 | 0.0007 | 0.047 | 0.0037 | 0.0047 | Mo:0.050 | Suitable |
| H | 0.18 | 0.5 | 1.7 | 0.004 | 0.0002 | 0.069 | 0.0046 | 0.0032 | V:0.050,Ni:0.15 | Suitable |
| I | 0.38 | 0.7 | 0.9 | 0.006 | 0.0003 | 0.079 | 0.0032 | 0.0048 | Sb:0.010 | Suitable |
| J | 0.29 | 1.9 | 1.0 | 0.009 | 0.0004 | 0.043 | 0.0048 | 0.0050 | Sn:0.012 | Suitable |
| K | 0.31 | 0.5 | 3.8 | 0.007 | 0.0008 | 0.086 | 0.0027 | 0.0033 | As:0.012,W:0.008 | Suitable |
| L | 0.29 | 0.2 | 0.6 | 0.096 | 0.0005 | 0.040 | 0.0036 | 0.0032 | Ta:0.010,REM:0.008 | Suitable |
| M | 0.32 | 0.7 | 1.3 | 0.004 | 0.0092 | 0.089 | 0.0038 | 0.0044 | Ca:0.0080 | Suitable |
| N | 0.31 | 0.6 | 0.7 | 0.004 | 0.0003 | 0.450 | 0.0042 | 0.0056 | Mg:0.0080 | Suitable |
| O | 0.31 | 0.5 | 1.3 | 0.008 | 0.0003 | 0.091 | 0.0095 | 0.0009 | Zn:0.008 | Suitable |
| P | 0.29 | 0.6 | 1.6 | 0.006 | 0.0006 | 0.078 | 0.0038 | 0.0098 | Co:0.008,Zr:0.008 | Suitable |
| Q | <u>0.13</u> | 0.6 | 1.1 | 0.005 | 0.0005 | 0.046 | 0.0046 | 0.0058 | - | Comparative |
| R | <u>0.46</u> | 0.3 | 0.7 | 0.005 | 0.0003 | 0.100 | 0.0049 | 0.0052 | - | Comparative |
| S | 0.30 | <u>2.2</u> | 0.8 | 0.004 | 0.0002 | 0.075 | 0.0025 | 0.0035 | - | Comparative |
| T | 0.33 | 1.0 | <u>4.2</u> | 0.003 | 0.0007 | 0.095 | 0.0038 | 0.0045 | - | Comparative |
| U | 0.32 | 0.2 | 1.6 | 0.003 | 0.0008 | <u>0.510</u> | 0.0020 | 0.0049 | - | Comparative |
| V | 0.32 | 0.9 | 0.5 | 0.005 | 0.0004 | 0.094 | <u>0.0110</u> | 0.0051 | - | Comparative |
| W | 0.26 | 0.3 | 0.7 | 0.002 | 0.0005 | 0.061 | 0.0031 | <u>0.0005</u> | - | Comparative |

(continued)

| Steel species | Chemical composition (mass %) | | | | | | | | | Remarks |
|---|---|---|---|---|---|---|---|---|---|---|
| | C | Si | Mn | P | S | sol. Al | N | B | others | |
| X | 0.35 | 0.8 | 1.3 | 0.004 | 0.0002 | 0.041 | 0.0040 | <u>0.0112</u> | - | Comparative |
| Y | 0.31 | 0.3 | 1.4 | 0.006 | 0.0002 | 0.037 | 0.0035 | 0.0033 | Cu:0.45, Mo:0.080, Ta:0.040, Zr:0.015 | Suitable |
| Z | 0.31 | 0.4 | 1.4 | 0.006 | 0.0006 | 0.037 | 0.0038 | 0.0032 | Cr:0.28, Ni:0.28, Ca:0.0130, W:0.014 | Suitable |
| AA | 0.30 | 0.3 | 0.9 | 0.009 | 0.0004 | 0.038 | 0.0045 | 0.0059 | Nb:0.058, Sb:0.015, Mg:0.0120, REM:0.013 | Suitable |
| AB | 0.32 | 0.7 | 0.7 | 0.004 | 0.0004 | 0.064 | 0.0040 | 0.0030 | Ti:0.055, Sn:0.018, Zn:0.013 | Suitable |
| AC | 0.31 | 0.4 | 1.7 | 0.006 | 0.0008 | 0.039 | 0.0048 | 0.0051 | V:0.091, As:0.018, Co:0.014 | Suitable |
| • The balance of the composition is Fe and incidental impurities. | | | | | | | | | | |

[Table 2]

| Steel sheet No. | Steel species | Hot rolling | | | | | | Cold rolling | Continuous annealing | | | | | | | | | | | Remarks |
| | | Heating and holding temp. (°C) | Heating and holding time (min) | Residence Time at 900-1000°C (sec) | FT (°C) (*1) | First average cooling rate (°C/s) (*2) | Coiling temp. (°C) | Rolling reduction (%) | Average heating rate (°C/s) (*3) | Annealing temp. (°C) | Soaking time (sec) | Second average cooling rate (°C/s) (*4) | Ar₃ (°C) | Third average cooling rate (°C/s) (*5) | Ar₃-80 (°C) | Fourth average cooling rate (°C/s) (*6) | Cooling stop temp. (°C) | Holding temp. (°C) | Holding time (sec) | |
|---|---|---|---|---|---|---|---|---|---|---|---|---|---|---|---|---|---|---|---|---|
| 1 | A | 1277 | 59 | 46 | 873 | 118 | 516 | 47 | 7.6 | 880 | 159 | 30 | 748 | 7 | 668 | 354 | 37 | 199 | 331 | Inventive Ex. |
| 2 | B | 1202 | 67 | 91 | 925 | 102 | 556 | 77 | 3.6 | 894 | 46 | 43 | 728 | 8 | 648 | 372 | 51 | 233 | 459 | Inventive Ex. |
| 3 | C | 1288 | 70 | 48 | 882 | 143 | 516 | 52 | 3.3 | 855 | 247 | 62 | 714 | 9 | 634 | 54 | 75 | 167 | 566 | Inventive Ex. |
| 4 | D | 1283 | 52 | 76 | 892 | 78 | 572 | 40 | 5.8 | 836 | 105 | 64 | 690 | 9 | 610 | 256 | 34 | 192 | 338 | Inventive Ex. |
| 5 | E | 1243 | 44 | 86 | 927 | 102 | 540 | 45 | 4.3 | 846 | 441 | 77 | 769 | 8 | 689 | 211 | 12 | 187 | 814 | Inventive Ex. |
| 6 | F | 1281 | 50 | 28 | 893 | 118 | 566 | 62 | 67 | 887 | 490 | 27 | 766 | 9 | 686 | 291 | 63 | 243 | 448 | Inventive Ex. |
| 7 | G | 1263 | 77 | 29 | 927 | 138 | 518 | 45 | 9.7 | 859 | 327 | 25 | 710 | 6 | 630 | 741 | 64 | 153 | 657 | Inventive Ex. |
| 8 | H | 1280 | 47 | 74 | 879 | 168 | 555 | 48 | 5.3 | 894 | 148 | 56 | 708 | 9 | 628 | 574 | 24 | 172 | 505 | Inventive Ex. |
| 9 | I | 1261 | 67 | 69 | 907 | 140 | 593 | 41 | 4.1 | 866 | 333 | 44 | 720 | 10 | 640 | 425 | 55 | 185 | 313 | Inventive Ex. |
| 10 | J | 1275 | 71 | 61 | 904 | 173 | 579 | 60 | 9.0 | 856 | 302 | 49 | 740 | 8 | 660 | 536 | 11 | 183 | 654 | Inventive Ex. |
| 11 | K | 1210 | 47 | 81 | 916 | 151 | 514 | 78 | 6.5 | 853 | 90 | 46 | 510 | 6 | 430 | 458 | 21 | 226 | 568 | Inventive Ex. |
| 12 | L | 1234 | 65 | 55 | 872 | 132 | 547 | 77 | 9.4 | 877 | 335 | 76 | 772 | 8 | 692 | 457 | 65 | 178 | 398 | Inventive Ex. |

| Steel sheet No. | Steel species | Production process | | | | | | | | | | | | | | | | | | Remarks |
|---|---|---|---|---|---|---|---|---|---|---|---|---|---|---|---|---|---|---|---|---|
| | | Hot rolling | | | | | | Cold rolling | Continuous annealing | | | | | | | | | | | |
| | | Heating and holding temp. (°C) | Heating and holding time (min) | Residence Time at 900-1000°C (sec) | FT (°C) (*1) | First average cooling rate (°C/s) (*2) | Coiling temp. (°C) | Rolling reduction (%) | Average heating rate (°C/s) (*3) | Annealing temp. (°C) | Soaking time (sec) | Second average cooling rate (°C/s) (*4) | $Ar_3$ (°C) | Third average cooling rate (°C/s) (*5) | $Ar_3$-80 (°C) | Fourth average cooling rate (°C/s) (*6) | Cooling stop temp. (°C) | Holding temp. (°C) | Holding time (sec) | |
| 13 | M | 1279 | 66 | 51 | 897 | 146 | 552 | 73 | 7.8 | 883 | 111 | 69 | 707 | 8 | 627 | 422 | 240 | 164 | 483 | Inventive Ex. |
| 14 | N | 1285 | 54 | 67 | 873 | 90 | 530 | 55 | 8.0 | 882 | 478 | 48 | 758 | 7 | 678 | 244 | 30 | 159 | 490 | Inventive Ex. |
| 15 | O | 1262 | 44 | 52 | 878 | 126 | 521 | 63 | 7.5 | 856 | 56 | 54 | 710 | 6 | 630 | 351 | 13 | 216 | 518 | Inventive Ex. |
| 16 | P | 1218 | 45 | 88 | 912 | 101 | 563 | 74 | 4.8 | 870 | 19 | 17 | 692 | 8 | 612 | 107 | 24 | 157 | 880 | Inventive Ex. |
| 17 | Q | 1261 | 47 | 41 | 908 | 167 | 576 | 62 | 5.3 | 870 | 135 | 69 | 782 | 8 | 702 | 87 | 51 | 211 | 331 | Comp. Ex. |
| 18 | R | 1298 | 79 | 94 | 908 | 140 | 588 | 63 | 4.6 | 848 | 522 | 17 | 711 | 7 | 631 | 646 | 71 | 153 | 601 | Comp. Ex. |
| 19 | S | 1236 | 42 | 43 | 894 | 85 | 597 | 46 | 3.2 | 831 | 126 | 68 | 753 | 8 | 673 | 96 | 80 | 236 | 543 | Comp. Ex. |
| 20 | T | 1263 | 71 | 55 | 853 | 92 | 572 | 44 | 5.3 | 834 | 376 | 55 | 472 | 5 | 392 | 263 | 10 | 254 | 502 | Comp. Ex. |
| 21 | U | 1242 | 54 | 31 | 857 | 126 | 503 | 60 | 4.4 | 887 | 443 | 56 | 683 | 10 | 603 | 311 | 12 | 226 | 650 | Comp. Ex. |
| 22 | V | 1248 | 73 | 80 | 912 | 133 | 525 | 55 | 3.2 | 896 | 417 | 68 | 771 | 9 | 691 | 322 | 33 | 194 | 743 | Comp. Ex. |
| 23 | W | 1205 | 61 | 70 | 914 | 139 | 548 | 77 | 5.7 | 853 | 551 | 50 | 773 | 8 | 693 | 514 | 58 | 259 | 703 | Comp. Ex. |
| 24 | X | 1295 | 46 | 54 | 896 | 151 | 546 | 50 | 9.8 | 873 | 49 | 21 | 698 | 7 | 618 | 467 | 12 | 252 | 676 | Comp. Ex. |

(continued)

| Steel sheet No. | Steel species | Production process | | | | | | | | | | | | | | | | | | | | Remarks |
|---|---|---|---|---|---|---|---|---|---|---|---|---|---|---|---|---|---|---|---|---|---|---|
| | | Hot rolling | | | | | | Cold rolling | Continuous annealing | | | | | | | | | | | | | |
| | | Heating and holding temp. (°C) | Heating and holding time (min) | Residence Time at 900-1000°C (sec) | FT (°C) (*1) | First average cooling rate (°C/s) (*2) | Coiling temp. (°C) | Rolling reduction (%) | Average heating rate (°C/s) (*3) | Annealing temp. (°C) | Soaking time (sec) | Second average cooling rate (°C/s) (*4) | Ar₃ (°C) | Third average cooling rate (°C/s) (*5) | Ar₃-80 (°C) | Fourth average cooling rate (°C/s) (*6) | Cooling stop temp. (°C) | Holding temp. (°C) | Holding time (sec) | |
| 25 | Y | 1251 | 73 | 36 | 850 | 122 | 594 | 49 | 9.7 | 843 | 154 | 73 | 703 | 8 | 623 | 571 | 74 | 151 | 493 | Inventive Ex. |
| 26 | Z | 1273 | 42 | 53 | 895 | 103 | 567 | 54 | 8.6 | 832 | 463 | 42 | 704 | 6 | 624 | 82 | 69 | 217 | 604 | Inventive Ex. |
| 27 | AA | 1229 | 72 | 88 | 873 | 179 | 550 | 49 | 9.2 | 831 | 405 | 61 | 747 | 10 | 667 | 584 | 61 | 197 | 483 | Inventive Ex. |
| 28 | AB | 1279 | 66 | 54 | 855 | 197 | 546 | 61 | 97 | 864 | 16 | 12 | 758 | 6 | 678 | 572 | 44 | 231 | 787 | Inventive Ex. |
| 29 | AC | 1202 | 60 | 36 | 881 | 95 | 532 | 51 | 4.2 | 852 | 343 | 50 | 682 | 9 | 602 | 332 | 30 | 160 | 657 | Inventive Ex. |
| 30 | A | 1050 | 58 | 70 | 886 | 175 | 538 | 58 | 4.4 | 894 | 296 | 60 | 748 | 8 | 668 | 491 | 61 | 195 | 752 | Comp. Ex. |
| 31 | A | 1229 | 10 | 40 | 929 | 64 | 518 | 69 | 7.7 | 851 | 450 | 28 | 748 | 6 | 668 | 174 | 53 | 224 | 650 | Comp. Ex. |
| 32 | A | 1277 | 58 | 160 | 874 | 197 | 513 | 68 | 87 | 839 | 217 | 56 | 748 | 6 | 668 | 495 | 51 | 165 | 478 | Comp. Ex. |
| 33 | A | 1254 | 41 | 27 | 853 | 32 | 504 | 72 | 4.4 | 869 | 493 | 75 | 748 | 9 | 668 | 609 | 34 | 216 | 493 | Comp. Ex. |
| 34 | A | 1270 | 70 | 71 | 893 | 192 | 680 | 71 | 8.7 | 897 | 215 | 55 | 748 | 7 | 668 | 691 | 38 | 255 | 868 | Comp. Ex. |
| 35 | A | 1247 | 75 | 41 | 857 | 65 | 514 | 67 | 0.5 | 886 | 18 | 43 | 748 | 6 | 668 | 769 | 48 | 246 | 441 | Comp. Ex. |
| 36 | A | 1209 | 79 | 26 | 865 | 166 | 517 | 51 | 67 | 800 | 103 | 50 | 748 | 7 | 668 | 481 | 35 | 168 | 475 | Comp. Ex. |

21

(continued)

| Steel sheet No. | Steel species | Production process | | | | | | | | | | | | | | | | | | Remarks |
|---|---|---|---|---|---|---|---|---|---|---|---|---|---|---|---|---|---|---|---|---|
| | | Hot rolling | | | | | | Cold rolling | Continuous annealing | | | | | | | | | | | |
| | | Heating and holding temp. (°C) | Heating and holding time (min) | Residence Time at 900-1000°C (sec) | FT (°C) (*1) | First average cooling rate (°C/s) (*2) | Coiling temp. (°C) | Rolling reduction (%) | Average heating rate (°C/s) (*3) | Annealing temp. (°C) | Soaking time (sec) | Second average cooling rate (°C/s) (*4) | $Ar_3$ (°C) | Third average cooling rate (°C/s) (*5) | $Ar_3$-80 (°C) | Fourth average cooling rate (°C/s) (*6) | Cooling stop temp. (°C) | Holding temp. (°C) | Holding time (sec) | |
| 37 | A | 1274 | 43 | 34 | 898 | 184 | 503 | 60 | 9.3 | <u>960</u> | 294 | 69 | 748 | 6 | 668 | 79 | 38 | 181 | 769 | Comp. Ex. |
| 38 | A | 1234 | 48 | 76 | 879 | 103 | 598 | 55 | 3.9 | 869 | <u>5</u> | 40 | 748 | 8 | 668 | 120 | 11 | 239 | 847 | Comp. Ex. |
| 39 | A | 1285 | 61 | 72 | 920 | 132 | 570 | 57 | 8.4 | 850 | <u>800</u> | 71 | 748 | 6 | 668 | 710 | 38 | 155 | 886 | Comp. Ex. |
| 40 | A | 1255 | 51 | 33 | 922 | 177 | 573 | 62 | 7.0 | 868 | 501 | <u>5</u> | 748 | 9 | 668 | 504 | 59 | 162 | 417 | Comp. Ex. |
| 41 | A | 1229 | 54 | 73 | 871 | 134 | 560 | 54 | 8.8 | 882 | 333 | 71 | 748 | <u>0.4</u> | 668 | 557 | 52 | 259 | 877 | Comp. Ex. |
| 42 | A | 1269 | 79 | 78 | 926 | 188 | 541 | 78 | 4.4 | 891 | 54 | 21 | 748 | <u>18</u> | 668 | 610 | 40 | 231 | 373 | Comp. Ex. |
| 43 | A | 1294 | 60 | 53 | 896 | 61 | 544 | 69 | 3.7 | 837 | 214 | 52 | 748 | 9 | 668 | <u>8</u> | 12 | 210 | 322 | Comp. Ex. |

(1) FT: finish rolling temperature (*2) First average cooling rate: average cooling rate during cooling from FT to 650°C (*3) Average heating rate: average heating rate during heating from 400°C to annealing temperature (*4) Second average cooling rate: average cooling rate during cooling from annealing temperature to point $Ar_3$

(*5) Third average cooling rate: average cooling rate during cooling from $Ar_3$ to $Ar_3$ - 80°C

(*6) Fourth average cooling rate: average cooling rate during cooling from $Ar_3$ - 80°C to cooling stop temperature

The resulting steel sheets were each subjected to quantification of the metal microstructure by the above-described methods, and also to a tensile test and a delayed fracture resistance evaluation test.

In particular, measurements of the microstructure were carried out as follows.

The area ratios of martensite, bainite, and ferrite were measured by the following method. An L-section of a steel sheet (a cross-section parallel to the rolling direction and perpendicular to a steel sheet surface (hereinafter also referred to as a perpendicular cross-section parallel to the rolling direction)) was polished and then corroded with Nital. The cross-section was observed by SEM at 2000-fold magnification in four fields of view, each field having a scope of 50 $\mu$m $\times$ 65 $\mu$m, at a position at a distance of 1/4 of the sheet thickness from the steel sheet surface, and microstructure photographs were subjected to image analysis for measurement of the area ratios. In the SEM observation, martensite and bainite are gray- or white-colored structures. Bainite has the following features. Bainite is a structure which has a plate-like shape with an aspect ratio of 2.5 or more and which is slightly blackish as compared to martensite. The width of the plate-like shape is 0.3 to 1.7 $\mu$m. The density of carbide particles having a diameter of 10 to 200 nm, distributed in the bainite, is 0 to 3 number/$\mu$m$^2$. On the other hand, ferrite is a black-colored region in SEM. Martensite and bainite contain trace amounts of a carbide, a nitride, a sulfide, and an oxide, which are difficult to remove. The area ratio of martensite or bainite refers to the area ratio of a region containing such substances.

Retained austenite (retained $\gamma$) was measured as follows. The surface of a steel sheet was chemically polished by a thickness of 200 $\mu$m with oxalic acid, and the polished sheet surface was subjected to X-ray diffractometry. The amount of retained $\gamma$ was calculated from the integrated intensity of the peaks of diffraction planes (200)$\alpha$, (211)$\alpha$, (220)$\alpha$, (200)$\gamma$, (220)$\gamma$, and (311)$\gamma$, measured using Mo-K$\alpha$ radiation.

The average crystal grain size of ferrite was measured by the following method. An L-section of a steel sheet (a perpendicular cross-section parallel to the rolling direction) was polished and then corroded with Nital. The cross-section was observed by SEM at 2000-fold magnification in 10 fields of view, each field having a scope of 50 $\mu$m $\times$ 65 $\mu$m, at a position at a distance of 1/4 of the sheet thickness from a steel sheet surface, and microstructure photographs were subjected to image analysis to determine an equivalent circular diameter.

The area ratio of ferrite precipitated on prior-austenite grain boundaries was measured by the following method.

First, an L-section of a steel sheet was mirror-polished by vibratory polishing in colloidal silica, and then the cross-section was subjected to electron backscatter diffraction (EBSD) measurement to obtain local crystal orientation data for 10 fields of view at a position at a distance of 1/4 of the sheet thickness from a steel sheet surface. The step size was set to be 0.10 $\mu$m, and the measurement area was set to be 50 $\mu$m $\times$ 50 $\mu$m. After cleanup processing was performed using analysis software OIM Analysis 7, the local crystal orientation data was analyzed to determine prior-austenite grain boundaries.

The cleanup processing involves replacing the orientation and CI value of a pixel having a CI value of 0.2 or less with those of a pixel which, among adjacent pixels, has the highest CI value.

In particular, cleanup processing was performed using the Neighbor CI Correlation function of the analysis software under a condition where a minimum confidence index parameter was set to 0.2.

A map of grain boundaries having a crystal orientation difference of not less than 20° and not more than 50° in terms of rotation angle was created, and the interfaces were determined to be prior-austenite grain boundaries.

After the EBSD measurement, the L-section of the steel sheet was corroded with Nital, and the same 10 fields of view as those used in the EBSD measurement were imaged by SEM at 3000-fold magnification. Each SEM image was superimposed on the map of prior-austenite grain boundaries in the same field of view, and ferrite present on the prior-austenite grain boundaries was identified, and the area ratio of such ferrite was measured.

A method was used for observing the same field of view with EBSD and SEM, which involves making an indentation with a Vickers hardness tester at an observation position on the steel sheet in advance, and using the indentation as a marker for the observation position.

The number density A of precipitates having an equivalent circular diameter of 500 nm or more was determined by the following method. An L-section of a steel sheet (a perpendicular cross-section parallel to the rolling direction) was polished, and then a 2-mm$^2$ area of the cross-section was continuously imaged by SEM, the area ranging from a 1/5 sheet thickness position to a 4/5 sheet thickness position, i.e. ranging from a position at a distance of 1/5 of the sheet thickness from a steel sheet surface, across the center position in the sheet thickness direction, to a position at a distance of 4/5 of the sheet thickness from the steel sheet surface. The number of such precipitates was measured from the SEM photographs. The imaging magnification was 2000 times. When a component analysis of an individual inclusion particle was performed, the analysis of the particle was performed at a magnification of 10000 times. Here, precipitates having an equivalent circular diameter of 500 nm or more were B-containing precipitates such as $Fe_{23}(C, B)_6$. The presence or absence of a B peak was examined by elemental analysis using energy dispersive X-ray spectroscopy (EDS) at an acceleration voltage of 3 kV. When a B peak was present, it indicates the presence of such B-containing precipitates.

The tensile strength TS was measured by a tensile test (in accordance with JIS Z 2241 (2022)) using a JIS No. 5 tensile test piece which had been cut out from a steel coil at a 1/4 coil width position such that the longitudinal direction coincides with a direction perpendicular to the rolling direction. Test pieces with a tensile strength TS of 1470 MPa or more were evaluated as acceptable.

Evaluation of the delayed fracture resistance was performed in the following manner.

A strip specimen, having a size of 100 mm in a direction perpendicular to the rolling direction and 30 mm in the rolling direction, was taken from a steel sheet (coil) at a position at a distance of 1/4 of the coil width from one end of the coil in the width direction. The long-side end surfaces with a length of 100 mm were sheared, and the specimen was bent as it was (without machining it to remove burrs) such that the burrs were on the outer periphery of the bend, and the specimen was fixed with bolts while maintaining its bent shape. The shear clearance was 13%, and the rake angle was 1°. The bending was performed such that the tip bending radius was 10 mm and the angle inside the bend apex was 90 degrees (V-bending). A punch was used in the bending which had a tip radius equal to the tip bending radius R, and was U-shaped (the tip R portion was semicircular and the punch body had a thickness of 2R). A die having a corner R of 30 mm was used in the bending. The depth to which the punch pushed the steel sheet was adjusted so that the tip bending angle (the angle inside the bend apex) would be 90 degrees (V-shape). While the specimen was clamped and tightened with a hydraulic jack so that the distance between the flange ends of the straight portions of the specimen after the bending was equal to that upon the bending (i.e. to cancel out widening of the gap between the flange ends due to spring-back), the specimen was fastened with bolts. The bolts were fixed through elliptical holes (minor axis 10 mm, major axis 15 mm) that had been formed in advance at positions 10 mm inside the short-side edges of the strip specimen. The bolt-fastened specimen was subjected to a delayed fracture resistance evaluation test by immersing the specimen in a solution prepared by mixing 0.1 mass % ammonium thiocyanate aqueous solution and McIlvaine buffer solution at a mass ratio of 1:1 and adjusting the pH to 8.0, and separately in a solution prepared in the same manner except for adjusting the pH to 7.4. The temperature of each solution was 20°C, and the amount of each solution per 1 cm$^3$ of the surface area of the specimen was 20 ml. After 48 hours, the presence or absence of visually visible cracks (length 1 mm or more) was checked. A specimen in which no cracks were observed after immersion in the solution adjusted to pH 8.0 was evaluated as excellent in delayed fracture resistance. A specimen in which no cracks were observed after immersion even in the solution adjusted to pH 7.4 was evaluated as particularly excellent in delayed fracture resistance. In Table 3, "○ (acceptable)" indicates a specimen in which no cracks were observed after immersion in the solution adjusted to pH 8.0, and "◎ (acceptable)" indicates a specimen in which no cracks were observed after immersion even in the solution adjusted to pH 7.4.

On the other hand, "× (unacceptable)" indicates a specimen in which cracks were observed after immersion in the solution adjusted to pH 8.0.

The microstructures and properties of the resulting steel sheets are shown in Table 3.

[Table 3]

| No | Steel species | Area ratio of martensite (%) | Ferrite | | | Area ratio of the balance (%) | A (number /mm$^2$) (*1) | A / [B] (× 10$^5$) (*2) | TS (MPa) | Delayed fracture resistance | Remarks |
|----|------|------|------|------|------|------|------|------|------|------|------|
| | | | Area ratio of ferrite (%) | Average grain size of ferrite (μm) | Area ratio of ferrite precipitated on prior-austenite grain boundaries to the entire ferrite (%) | | | | | | |
| 1 | A | 90 | 10 | 1.3 | 100 | 0 | 2169 | 5.04 | 1712 | ◎ | Inventive Ex. |
| 2 | B | 92 | 8 | 2.8 | 100 | 0 | 2879 | 5.88 | 1713 | ◎ | Inventive Ex. |
| 3 | C | 93 | 7 | 2.2 | 95 | 0 | 1776 | 4.80 | 1958 | ○ | Inventive Ex. |
| 4 | D | 89 | 11 | 1.3 | 82 | 0 | 3534 | 6.09 | 1847 | ◎ | Inventive Ex. |
| 5 | E | 92 | 8 | 1.4 | 100 | 0 | 1479 | 4.35 | 1772 | ◎ | Inventive Ex. |
| 6 | F | 93 | 7 | 3.1 | 95 | 0 | 2603 | 5.54 | 1630 | ◎ | Inventive Ex. |
| 7 | G | 93 | 7 | 2.6 | 93 | 0 | 2413 | 5.13 | 1794 | ◎ | Inventive Ex. |
| 8 | H | 93 | 7 | 2.7 | 100 | 0 | 1695 | 5.30 | 1501 | ◎ | Inventive Ex. |
| 9 | I | 89 | 11 | 3.0 | 91 | 0 | 2589 | 5.39 | 1970 | ○ | Inventive Ex. |
| 10 | J | 92 | 8 | 2.8 | 100 | 0 | 3019 | 6.04 | 1753 | ◎ | Inventive Ex. |
| 11 | K | 91 | 9 | 3.9 | 100 | 0 | 1709 | 5.18 | 1670 | ◎ | Inventive Ex. |
| 12 | L | 93 | 7 | 3.8 | 98 | 0 | 1538 | 4.81 | 1785 | ◎ | Inventive Ex. |
| 13 | M | 89 | 11 | 2.4 | 98 | 0 | 2402 | 5.46 | 1897 | ◎ | Inventive Ex. |
| 14 | N | 91 | 9 | 1.1 | 100 | 0 | 3254 | 5.81 | 1903 | ○ | Inventive Ex. |
| 15 | O | 89 | 11 | 3.5 | 55 | 0 | 515 | 5.72 | 1709 | ◎ | Inventive Ex. |
| 16 | P | 90 | 10 | 2.9 | 43 | 0 | 2252 | 2.30 | 1830 | ○ | Inventive Ex. |
| 17 | Q | 89 | 11 | 1.5 | 75 | 0 | 3492 | 6.02 | 1241 | ◎ | Comp. Ex. |
| 18 | R | 96 | 4 | 1.0 | 100 | 0 | 3146 | 6.05 | 2201 | × | Comp. Ex. |
| 19 | S | 92 | 8 | 2.2 | 100 | 0 | 1625 | 4.64 | 1606 | × | Comp. Ex. |
| 20 | T | 97 | 3 | 2.0 | 100 | 0 | 2356 | 5.23 | 1669 | × | Comp. Ex. |
| 21 | U | 93 | 7 | 4.0 | 86 | 0 | 4350 | 8.88 | 1705 | × | Comp. Ex. |
| 22 | V | 89 | 11 | 2.7 | 98 | 0 | 4669 | 9.15 | 1794 | × | Comp. Ex. |
| 23 | W | 88 | 12 | 3.9 | 91 | 0 | 317 | 6.35 | 1416 | × | Comp. Ex. |

(continued)

| No | Steel species | Area ratio of martensite (%) | Ferrite: Area ratio of ferrite (%) | Ferrite: Average grain size of ferrite (μm) | Ferrite: Area ratio of ferrite precipitated on prior-austenite grain boundaries to the entire ferrite (%) | Area ratio of the balance (%) | A (number/mm²)(*1) | A/[B] (×10⁵)(*2) | TS (MPa) | Delayed fracture resistance | Remarks |
|---|---|---|---|---|---|---|---|---|---|---|---|
| 24 | X | 94 | 6 | 2.5 | 100 | 0 | 10120 | 9.04 | 1698 | × | Comp. Ex. |
| 25 | Y | 91 | 9 | 1.5 | 100 | 0 | 2005 | 6.01 | 1676 | ◎ | Inventive Ex. |
| 26 | Z | 88 | 12 | 2.9 | 95 | 0 | 1563 | 4.93 | 1816 | ◎ | Inventive Ex. |
| 27 | AA | 90 | 10 | 3.8 | 95 | 0 | 2106 | 3.58 | 1762 | ◎ | Inventive Ex. |
| 28 | AB | 90 | 10 | 3.6 | 96 | 0 | 2089 | 6.87 | 1777 | ◎ | Inventive Ex. |
| 29 | AC | 88 | 12 | 1.2 | 100 | 0 | 2193 | 4.27 | 1823 | ○ | Inventive Ex. |
| 30 | A | 91 | 9 | 3.5 | 100 | 0 | 4872 | 11.33 | 1725 | × | Comp. Ex. |
| 31 | A | 92 | 8 | 3.0 | 100 | 0 | 4432 | 10.31 | 1634 | × | Comp. Ex. |
| 32 | A | 91 | 9 | 2.8 | 100 | 0 | 5004 | 11.64 | 1824 | × | Comp. Ex. |
| 33 | A | 90 | 10 | 1.8 | 100 | 0 | 4624 | 10.75 | 1652 | × | Comp. Ex. |
| 34 | A | 89 | 11 | 3.7 | 100 | 0 | 4468 | 10.39 | 1528 | × | Comp. Ex. |
| 35 | A | 91 | 9 | 1.4 | 42 | 0 | 5381 | 12.51 | 1558 | × | Comp. Ex. |
| 36 | A | 82 | 18 | 2.4 | 28 | 0 | 3880 | 9.02 | 1786 | × | Comp. Ex. |
| 37 | A | 92 | 8 | 11.0 | 100 | 0 | 3250 | 7.56 | 1773 | × | Comp. Ex. |
| 38 | A | 87 | 13 | 3.7 | 35 | 0 | 3788 | 8.81 | 1570 | × | Comp. Ex. |
| 39 | A | 92 | 8 | 13.0 | 100 | 0 | 4791 | 11.14 | 1855 | × | Comp. Ex. |
| 40 | A | 89 | 11 | 3.9 | 100 | 0 | 3876 | 9.01 | 1828 | × | Comp. Ex. |
| 41 | A | 81 | 19 | 1.3 | 100 | 0 | 2239 | 5.21 | 1456 | × | Comp. Ex. |
| 42 | A | 97 | 3 | 3.5 | 100 | 0 | 2321 | 5.40 | 1788 | × | Comp. Ex. |
| 43 | A | 56 | 8 | 2.1 | 100 | 36 | 2540 | 5.91 | 1460 | × | Comp. Ex. |

(*1) A: number density of precipitates having an equivalent circular diameter of 500 nm or more (number/mm²)
(*2) [B]: B content (mass %)

The steel sheets within the scope of the present invention had high strength and excellent delayed fracture resistance. Among the steel sheets within the scope of the present invention, the steel sheets having a tensile strength of 1800 MPa or lower were evaluated as "◎ (acceptable)", and thus were particularly excellent in delayed fracture resistance.

The steel sheets in which the area ratio of ferrite precipitated on prior-austenite grain boundaries to the entire ferrite was 50% or more, even when their tensile strength was more than 1800 MPa and not more than 1900 MPa, were evaluated as "◎ (acceptable)", and thus were particularly excellent in delayed fracture resistance.

On the other hand, the comparative steel sheets were insufficient in at least one of tensile strength and delayed fracture resistance.

Further, it was found that because of the high strength and excellent delayed fracture resistance of the steel sheets of the inventive examples, members obtained by subjecting the steel sheets of the inventive examples to a forming process, and members obtained by subjecting the steel sheets of the inventive examples to a joining process likewise had high strength and excellent delayed fracture resistance.

**Claims**

1. A steel sheet having a chemical composition comprising, in mass %:

   C: not less than 0.15% and not more than 0.45%;
   Si: not more than 2.0%;
   Mn: not more than 4.0%;
   P: not more than 0.10%;
   S: not more than 0.01%;
   sol. Al: not more than 0.50%;
   N: not more than 0.010%; and
   B: not less than 0.0008% and not more than 0.0100%,
   with the balance being Fe and incidental impurities,

   wherein the steel sheet has a steel microstructure where the area ratio of martensite to the entire microstructure is not less than 85% and less than 95%, the area ratio of ferrite to the entire microstructure is not less than 5% and not more than 15%, and the average crystal grain size of ferrite is 10 $\mu$m or less, and
   wherein the number density A of precipitates having an equivalent circular diameter of 500 nm or more satisfies the following formula (1):

$$A\ (number/mm^2) \leq 8.5 \times 10^5 \times [B] \qquad formula\ (1)$$

   where [B] represents the content (mass %) of B.

2. The steel sheet according to claim 1, wherein 50% or more, in terms of area ratio, of the ferrite is ferrite that has been precipitated on prior-austenite grain boundaries.

3. The steel sheet according to claim 1 or 2, wherein the chemical composition further comprises, in mass %, one or more selected from the following:

   Cu: not more than 1.00%;
   Cr: not more than 1.00%;
   Nb: not more than 0.10%;
   Ti: not more than 0.10%;
   V: not more than 0.50%;
   Mo: not more than 0.50%;
   Ni: not more than 1.00%;
   Sb: not more than 0.10%;
   Sn: not more than 0.10%;
   As: not more than 0.10%;
   Ta: not more than 0.10%;
   Ca: not more than 0.020%;
   Mg: not more than 0.020%;

Zn: not more than 0.020%;
Co: not more than 0.020%;
Zr: not more than 0.020%;
W: not more than 0.020%; and
REM: not more than 0.020%.

4. The steel sheet according to any one of claims 1 to 3, having a coating layer on a surface of the steel sheet.

5. A member using the steel sheet according to any one of claims 1 to 4.

6. A method for producing a steel sheet, comprising:

holding a steel slab having the chemical composition according to claim 1 or 3 at a heating and holding temperature, which is a slab surface temperature, of 1100°C or higher for 30 minutes or more;
then subjecting the steel slab to hot finish rolling under the conditions of a residence time of not less than 20 seconds and not more than 150 seconds at 900 to 1000°C, and a finish rolling temperature of 850°C or higher;
cooling the rolled steel at an average cooling rate of 40°C/s or more in the range from the finish rolling temperature to 650°C;
then coiling the rolled steel at a coiling temperature of 650°C or lower to obtain a hot-rolled steel sheet;
subjecting the hot-rolled steel sheet to cold rolling at a rolling reduction of 40% or more to obtain a cold-rolled steel sheet; and
subjecting the cold-rolled steel sheet to continuous annealing by
heating the cold-rolled steel sheet from 400°C to an annealing temperature of 830 to 950°C at an average heating rate of 1.0°C/s or more,
holding the steel sheet at the annealing temperature for not less than 10 seconds and not more than 600 seconds,
then cooling the steel sheet from the annealing temperature to point $Ar_3$ at an average cooling rate of 10°C/s or more,
cooling the steel sheet from the point $Ar_3$ to (point $Ar_3$ - 80°C) at an average cooling rate of 1 to 10°C/s,
cooling the steel sheet from (point $Ar_3$ - 80°C) to a cooling stop temperature of 260°C or lower at an average cooling rate of 10°C/s or more, and
then holding the steel sheet at a holding temperature of 150 to 260°C for 20 to 1500 seconds.

7. The method for producing a steel sheet according to claim 6, wherein the steel sheet after the continuous annealing is subjected to surface coating.

8. A method for producing a member, comprising a step of subjecting the steel sheet according to any one of claims 1 to 4 to at least one of a forming process and a joining process.

## INTERNATIONAL SEARCH REPORT

| | International application No. |
|---|---|
| | **PCT/JP2024/002240** |

**A. CLASSIFICATION OF SUBJECT MATTER**

*C22C 38/00*(2006.01)i; *C21D 9/46*(2006.01)i; *C22C 38/06*(2006.01)i; *C22C 38/60*(2006.01)i
FI: C22C38/00 301S; C22C38/00 301T; C22C38/06; C22C38/60; C21D9/46 G; C21D9/46 J

According to International Patent Classification (IPC) or to both national classification and IPC

**B. FIELDS SEARCHED**

Minimum documentation searched (classification system followed by classification symbols)

C22C38/00-38/60; C21D9/46; C21D8/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/151428 A1 (JFE STEEL CORPORATION) 08 October 2015 (2015-10-08) claims | 1-8 |
| A | WO 2018/030501 A1 (JFE STEEL CORPORATION) 15 February 2018 (2018-02-15) claims | 1-8 |
| P, A | WO 2023/008003 A1 (JFE STEEL CORPORATION) 02 February 2023 (2023-02-02) claims | 1-8 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2024** | **16 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

# EP 4 632 098 A1

## INTERNATIONAL SEARCH REPORT
### Information on patent family members

International application No.

**PCT/JP2024/002240**

| Patent document cited in search report | | | Publication date (day/month/year) | Patent family member(s) | | | Publication date (day/month/year) |
|---|---|---|---|---|---|---|---|
| WO | 2015/151428 | A1 | 08 October 2015 | EP claims | 3128026 | A1 | |
| | | | | US | 2017/0022582 | A1 | |
| | | | | CN | 106133173 | A | |
| WO | 2018/030501 | A1 | 15 February 2018 | EP claims | 3467135 | A1 | |
| | | | | US | 2019/0271052 | A1 | |
| | | | | CN | 109563582 | A | |
| WO | 2023/008003 | A1 | 02 February 2023 | CN | 117651786 | A | |
| | | | | JP | 7226672 | B1 | |

Form PCT/ISA/210 (patent family annex) (July 2022)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6388085 B

- JP 4712882 B